# EUROPEAN PATENT APPLICATION

(11) **EP 4 221 155 A1**
(43) Date of publication of application: **02.08.2023**
(21) Application number: 22153767.3
(22) Date of filing: 27.01.2022
(51) Int. Cl.: H04L 67/00, H04W 4/50

(54) **SERVICE FUNCTION CHAINING ENHANCEMENT**

(71) Applicant: Nokia Solutions and Networks Oy, 02610 Espoo (FI)
(72) Inventor: HE, Mu, 80639 Munich (DE); GEORGIOS, Gkellas, 13232 Petroupoli (GR); THIEBAUT, Laurent, 92160 Antony (FR); CHANDRAMOULI, Devaki, Texas, 75025 (US); GKATZIKIS, Lazaros, 92130 Issy-les-moulineaux (FR); LIEBHART, Rainer, 81476 Munich (DE)
(74) Representative: TBK

(57) **Abstract**

There are provided measures for service function chaining enhancement. Such measures, for example, comprise receiving a first service function chaining related request from a first network entity, modifying a user data repository entity based on content of said first service function chaining related request, and transmitting a first service function chaining related response towards said first network entity, wherein said service function chaining related request is indicative of one of a demand for creating a service function chain association, a demand for updating said service function chain association, and a demand for deleting said service function chain association.

## Description

### Field

Various example embodiments described herein generally relate to service function chaining enhancement. More specifically, various example embodiments relate to measures (including methods, apparatuses and computer program products) for realizing service function chaining enhancement.

### Background

In the context of service function chains (SFC) in wireless communication systems, situations may arise in which certain configurations thereof may present the challenge to realize a flexible provisioning and implementation of SFCs.

Hence, there is a need to provide for service function chaining enhancement.

### Summary

Various example embodiments address issues, problems, and/or drawbacks described herein as well as those recognized by a person skilled in the art.

Various aspects of example embodiments are set out in the appended claims.

According to a first aspect, there is provided a method of a network exposure function entity, the method comprising receiving a first service function chaining related request from a first network entity, modifying a user data repository entity based on content of said first service function chaining related request, and transmitting a first service function chaining related response towards said first network entity, wherein said service function chaining related request is indicative of one of a demand for creating a service function chain association, a demand for updating said service function chain association, and a demand for deleting said service function chain association.

According to a second aspect, there is provided a method of a user data repository entity, the method comprising receiving, from a network exposure function entity, a service function chaining related user data repository entity modification operation, and modifying a storage content based on said service function chaining related user data repository entity modification operation, wherein said service function chaining related user data repository entity modification operation is a service function chaining related user data repository entity storing operation including at least a transaction identifier identifying a service function chain association, and in relation to said modifying, the method further comprises storing content of said service function chaining related user data repository entity storing operation as an entry labeled with said transaction identifier.

According to a third aspect, there is provided a method of a policy control function entity, the method comprising receiving service function chaining information related to a packet data unit session, and creating policy information for said packet data unit session based on said service function chaining information.

According to a fourth aspect, there is provided a method comprising determining an association between information on a service function chain comprising at least one service function, information on network traffic to be handled by said service function chain, and information on how to forward said network traffic to the service function chain, wherein said information on network traffic to be handled by said service function chain includes information on at least one of a network traffic type and a definition of communication endpoints for such traffic, and transmitting information on said association towards a first network entity facilitating policy control in a network.

According to a fifth aspect, there is provided a method comprising receiving information on an association between information on a service function path which is an instance of a service function chain comprising at least one service function and information on network traffic to be handled by said service function path and information on how to forward said network traffic, wherein said information on network traffic to be handled by said service function path includes information on a combination of a network traffic type and communication endpoints, and creating policy information based on said information on said association.

According to a sixth aspect, there is provided an apparatus of a network exposure function entity, the apparatus comprising receiving circuitry configured to receive a first service function chaining related request from a first network entity, modifying circuitry configured to modify a user data repository entity based on content of said first service function chaining related request, and transmitting circuitry configured to transmit a first service function chaining related response towards said first network entity, wherein said service function chaining related request is indicative of one of a demand for creating a service function chain association, a demand for updating said service function chain association, and a demand for deleting said service function chain association.

According to a seventh aspect, there is provided an apparatus of a user data repository entity, the apparatus comprising receiving circuitry configured to receive, from a network exposure function entity, a service function chaining related user data repository entity modification operation, and modifying circuitry configured to modify a storage content based on said service function chaining related user data repository entity modification operation, wherein said service function chaining related user data repository entity modification operation is a service function chaining related user data repository entity storing operation including at least a transaction identifier identifying a service function chain association, and the apparatus further comprises storing circuitry configured to store content of said service function chaining related user data repository entity storing operation as an entry labeled with said transaction identifier.

According to an eighth aspect, there is provided an apparatus of a policy control function entity, the apparatus comprising receiving circuitry configured to receive service function chaining information related to a packet data unit session, and creating circuitry configured to create policy information for said packet data unit session based on said service function chaining information.

According to a ninth aspect, there is provided an apparatus of a network exposure function entity, the apparatus comprising at least one processor, at least one memory including computer program code, and at least one interface configured for communication with at least another apparatus, the at least one processor, with the at least one memory and the computer program code, being configured to cause the apparatus to perform receiving a first service function chaining related request from a first network entity, modifying a user data repository entity based on content of said first service function chaining related request, and transmitting a first service function chaining related response towards said first network entity, wherein said service function chaining related request is indicative of one of a demand for creating a service function chain association, a demand for updating said service function chain association, and a demand for deleting said service function chain association.

According to a tenth aspect, there is provided an apparatus of a user data repository entity, the apparatus comprising at least one processor, at least one memory including computer program code, and at least one interface configured for communication with at least another apparatus, the at least one processor, with the at least one memory and the computer program code, being configured to cause the apparatus to perform receiving, from a network exposure function entity, a service function chaining related user data repository entity modification operation, and modifying a storage content based on said service function chaining related user data repository entity modification operation, wherein said service function chaining related user data repository entity modification operation is a service function chaining related user data repository entity storing operation including at least a transaction identifier identifying a service function chain association, and in relation to said modifying, the at least one processor, with the at least one memory and the computer program code, being configured to cause the apparatus to perform storing content of said service function chaining related user data repository entity storing operation as an entry labeled with said transaction identifier.

According to an eleventh aspect, there is provided an apparatus of a policy control function entity, the apparatus comprising at least one processor, at least one memory including computer program code, and at least one interface configured for communication with at least another apparatus, the at least one processor, with the at least one memory and the computer program code, being configured to cause the apparatus to perform receiving service function chaining information related to a packet data unit session, and creating policy information for said packet data unit session based on said service function chaining information.

According to a twelfth aspect, there is provided an apparatus comprising determining an association between information on a service function chain comprising at least one service function, information on network traffic to be handled by said service function chain, and information on how to forward said network traffic to the service function chain, wherein said information on network traffic to be handled by said service function chain includes information on at least one of a network traffic type and a definition of communication endpoints for such traffic, and transmitting information on said association towards a first network entity facilitating policy control in a network.

According to a thirteenth aspect, there is provided an apparatus comprising receiving information on an association between information on a service function path which is an instance of a service function chain comprising at least one service function and information on network traffic to be handled by said service function path and information on how to forward said network traffic, wherein said information on network traffic to be handled by said service function path includes information on a combination of a network traffic type and communication endpoints, and creating policy information based on said information on said association.

According to a fourteenth aspect, there is provided an apparatus comprising at least one processor, at least one memory including computer program code, and at least one interface configured for communication with at least another apparatus, the at least one processor, with the at least one memory and the computer program code, being configured to cause the apparatus to perform determining an association between information on a service function chain comprising at least one service function, information on network traffic to be handled by said service function chain, and information on how to forward said network traffic to the service function chain, wherein said information on network traffic to be handled by said service function chain includes information on at least one of a network traffic type and a definition of communication endpoints for such traffic, and transmitting information on said association towards a first network entity facilitating policy control in a network.

According to a fifteenth aspect, there is provided an apparatus comprising at least one processor, at least one memory including computer program code, and at least one interface configured for communication with at least another apparatus, the at least one processor, with the at least one memory and the computer program code, being configured to cause the apparatus to perform receiving information on an association between information on a service function path which is an instance of a service function chain comprising at least one service function and information on network traffic to be handled by said service function path and information on how to forward said network traffic, wherein said information on network traffic to be handled by said service function path includes information on a combination of a network traffic type and communication endpoints, and creating policy information based on said information on said association.

According to a sixteenth aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient creation and management of SFCs to fulfill AFs needs for respective functionality with respect to certain network traffic, to thereby solve at least part of the issues, problems, and/or drawbacks described herein as well as those recognized by a person skilled in the art.

By way of example embodiments, there is provided service function chaining enhancement. More specifically, by way of example embodiments, there are provided measures and mechanisms for realizing service function chaining enhancement.

Thus, improvement is achieved by methods, apparatuses and computer program products enabling/realizing service function chaining enhancement.

### Brief description of the drawings

In the following, example embodiments will be described in greater detail by way of non-limiting examples with reference to the accompanying drawings, in which
Figure 1 is a block diagram illustrating an apparatus according to at least one example embodiment,
Figure 2 is a block diagram illustrating an apparatus according to at least one example embodiment,
Figure 3 is a block diagram illustrating an apparatus according to at least one example embodiment,
Figure 4 is a block diagram illustrating an apparatus according to at least one example embodiment,
Figure 5 is a block diagram illustrating an apparatus according to at least one example embodiment,
Figure 6 is a block diagram illustrating an apparatus according to at least one example embodiment,
Figure 7 is a block diagram illustrating an apparatus according to at least one example embodiment,
Figure 8 is a block diagram illustrating an apparatus according to at least one example embodiment,
Figure 9 is a block diagram illustrating an apparatus according to at least one example embodiment,
Figure 10 is a block diagram illustrating an apparatus according to at least one example embodiment,
Figure 11 is a block diagram illustrating an apparatus according to at least one example embodiment,
Figure 12 is a block diagram illustrating an apparatus according to at least one example embodiment,
Figure 13 is a schematic diagram of a procedure according to at least one example embodiment,
Figure 14 is a schematic diagram of a procedure according to at least one example embodiment,
Figure 15 is a schematic diagram of a procedure according to at least one example embodiment,
Figure 16 is a schematic diagram of a procedure according to at least one example embodiment,
Figure 17 is a schematic diagram of a procedure according to example embodiments,
Figure 18 is a schematic diagram of a procedure according to at least one example embodiment,
Figure 19 is a schematic diagram illustrating terminology used in relation to service function chaining,
Figure 20 shows a schematic diagram of signaling sequences according to at least one example embodiment,
Figure 21 shows a schematic diagram of signaling sequences according to at least one example embodiment,
Figure 22 is a block diagram alternatively illustrating apparatuses according to at least one example embodiment, and
Figure 23 is a block diagram alternatively illustrating apparatuses according to at least one example embodiment.

### Detailed description

In the following, description will be made with respect to example embodiments. A person skilled in the art will appreciate that the detailed description is by no means to be understood as limiting.

It is to be noted that the following description refers to specifications being used as non-limiting examples for certain network configurations and deployments. Namely, the following description to 3GPP specifications, being used as non-limiting examples for certain network configurations and deployments. As such, the description of example embodiments given herein specifically refers to terminology which is directly related thereto. Such terminology is only used in the context of example embodiments, and is not intended to be limiting in any way. Rather, any other communication or communication related system deployments, etc. may also be utilized.

Various example embodiments and implementations described herein and aspects thereof are described using several variants and/or alternatives. It is generally noted that, according to certain needs and constraints, all of the described variants and/or alternatives may be provided alone or in any combination (also including combinations of individual features of the various variants and/or alternatives).

It is further noted that the terms "first", "second", "third", etc. do not imply a sequence or otherwise indicate a temporal relationship (unless explicitly and clearly articulated in the specification). Instead, if not otherwise indicated, these terms are mainly used to differentiate between steps, entities, units, etc.

According to example embodiments, in general terms, there are provided measures and mechanisms for (enabling/realizing) service function chaining enhancement.

In this specification, "service function" means a service function (e.g. network address translation (NAT), Firewall (FW), deep packet inspection (DPI), application based packet treatment) used singularly or in collaboration with other service functions. Further, in this specification, "service chain" (or "service function chain") defines services required and their order to be applied to frames/packets. Further, in this specification, "service path" (or "service function path") means a forwarding path used for delivery of traffic along a service chain. Here, a service path may be uni- or bi-directional. Finally, in this specification, "service node" (or "service function node") means a physical or virtual element providing one or more service functions.

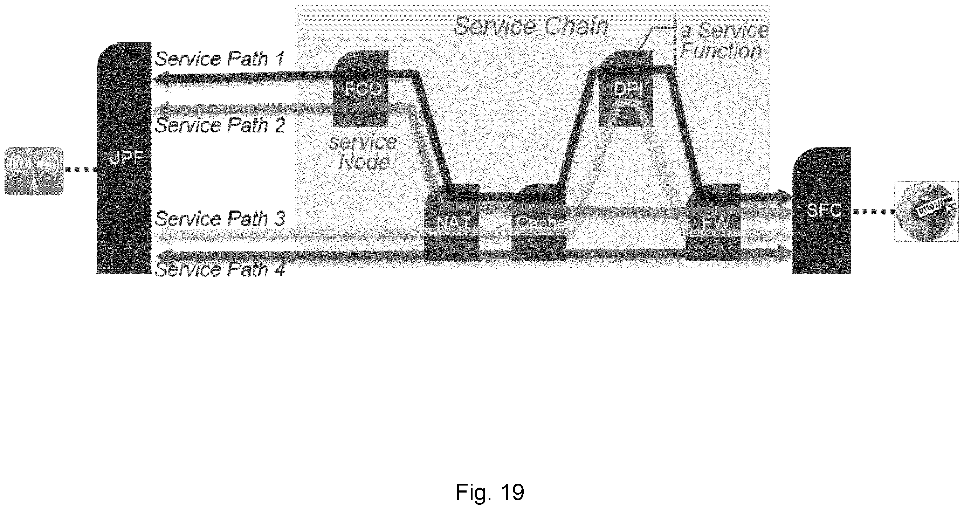

Figure 19 is a schematic diagram illustrating terminology used in relation to service function chaining, and in particular provides an overview of service chains and entities involved in service chains as outlined above.

Traffic sent from a user equipment (UE) is transported via a mobile network to a data network (DN), e.g., the Internet.

Between the mobile network and the actual DN, there may be an N6-LAN on the path, which may offer a wide variety of service functions (SF), to handle user plane traffic between the mobile network and the DN (e.g. content/application servers).

Network operators or third parties can provide enhanced security and various value-added services in N6-LAN using service function chains (SFC) including e.g., FW, NAT, transmission control protocol / internet protocol (TCP/IP) optimization, DPI, etc. An SFC is defined as a logical representation of an ordered set (sequence) of SFs.

A service function path (SFP) is an implementation/instance of an SFC. In other words, an SFC can be implemented as more than one different SFP instances (e.g. different instances / SFPs corresponding to different N6 interfaces between 5GS and the DN).

In an SFC, the next hop SF may be determined based on the result of traffic processing by the previous SF.

An SFC is defined as a generally ordered list of SFs that need to successively handle traffic. For example, traffic is first handled by an "SF 1" (e.g. DPI), then by an "SF 2" (e.g. TCP/IP optimization), and lastly by an "SF 3" (e.g. Firewall).

Even though the N6-LAN (and SFC) is not standardized by 3^{rd} Generation Partnership Project (3GPP), the management (e.g., making use of deployed service functions in N6-LAN) of SFCs is in 3GPP's scope both for Evolved Packet System (EPS) and 5GC.

Steering traffic to predefined SFC(s) is specified in 3GPP via traffic steering control, which is triggered by a policy control function (PCF) or configuration and includes steering the detected service data flows matching application detection filters or service data flow filter(s) in policy and charging control (PCC) rules.

Traffic steering control includes applying a specific N6 traffic steering policy (TSP) to steer traffic to N6 service functions. PCF gathers multiple inputs, selects a TSP, and wraps up traffic steering control information in a PCC rule sent to a session management function (SMF).

The traffic steering control information may include a set of data network access identifier(s) (DNAI). For each DNAI, a TSP ID and/or N6 traffic routing information is dynamically provided by an application function (AF). Based on the TSP ID(s), a user plane function (UPF) may exchange traffic with an SFP, e.g., remove or insert VLAN tags on N6 interfaces for downlink (DL) and uplink (UL) packets/frames.

There are techniques for which it is possible to apply existing SFCs with existing functions in a rather static manner.

However, according thereto, an AF can only leverage a fixed chain of functions given the list of available functions.

Namely, in Long Term Evolution (LTE) / Evolved Packet Core (EPC) (4G networks), a policy and charging rules function (PCRF) supports generation of traffic steering policies for service steering in the SGi-LAN (corresponding to N6-LAN), which ensures a central function controlling all the subscriber related policies within the 3GPP core network architecture. Heretofore, an interface called St between the PCRF and a so-called traffic steering support function (TSSF) is defined. This interface enables the PCRF to send traffic steering control information to the TSSF, to ensure that the related TSP(s) are enforced in the SGi-LAN. A TSP could also be locally configured in TSSF and might apply to UL traffic, DL traffic, or to both. Alternatively, a traffic detection function (TDF) or a packet data network gateway in control plane (PGW-c) could be the recipient of TSPs from PCRF via Sd, Gx, respectively.

Further, according to certain techniques, AF-influenced traffic routing is defined, but it is limited to influencing SMF routing decisions for traffic of protocol data unit (PDU) session(s) to a local Data Network (identified by a DNAI). The AF influenced traffic steering enforcement control might include per DNAI a reference to a pre-configured traffic steering policy at the SMF.

Thus, a more flexible provision and implementation of SFCs is needed.

Namely, a framework can be supported between a network operator and third parties to allow deploying and making use of currently non-existing SFCs, even with new functions (e.g., AF-influenced SFC construction), as well as supporting dynamically created SFCs, which means chains where the next hop service function depends on the outcome of the traffic processing by the current service function.

According to example embodiments, such framework may incorporate the following steps or principles:
- Authenticating the third parties in order to allow creating and managing SFCs,
- Providing the AF(s) with the available service function chains,
- Allowing implementation of a new SFC, potentially with new function(s), and
- Allowing to configure the steering policy, accordingly.

Since the third parties might be outside the 3GPP network providing N6-LAN services, new network exposure function (NEF) service(s) and application programming interface(s) (API) are proposed to be introduced according to example embodiments to facilitate the above.

Hence, in brief, according to example embodiments, the SFC/SFP configuration aims at providing a PCF with information on
- Which SFP applies to a PDU session of a UE (which UE(s) should a SFP apply to, for which data network name (DNN) and/or single - network slice selection assistance information (S-NSSAI),
- Which traffic of this PDU session for a given UE is to be handled by the SFP identified by Ethernet (ETH) or IP traffic filter, and on
- How should the UPF tag (e.g. network service header (NSH) / VXLAN tag / generic routing encapsulation (GRE) tunnel header) traffic to identify the SFP to handle this traffic (SFC classification role of the UPF).

According to example embodiments, the above information is used by PCF to create PCC rules for PDU sessions.

Here, example embodiments consider an AF that wants to manage and use SFC(s) created at the N6 boundaries of a 5GC; this AF may belong to the 5GC operator or may be external.

According to example embodiments, the SFC configuration may include two main steps, namely
A) A step A) of creating a SFC and its associated SFP(s). This may involve an Operations, Administration and Maintenance (OAM) entity called service chain orchestrator (SCO). This step associates an SFC with a list (possibly ordered) of SFs and has as output at least an SFC identifier or SFC ID.
   - The list of SFs indicates via which successive SF the traffic of the UE needs to be handled.
   - There is an SFC catalogue that the AF may look up. If the SFC corresponding to the AF needs is already existing, then the AF can get its reference information (e.g. SFC ID) and directly proceed to step B.
B) A step B) of associating the SFC and SFP(s) with certain traffic (identified by traffic filters) and UE(s) (e.g. traffic of a UE, a group of UEs, a (set of) DNN/S-NSSAI pair, etc.). This may involve triggering the PCF that then can use this information to create corresponding PCC rules to be applied to traffic of PDU sessions.

According to example embodiments, each SFP might map to a DNAI (to a N6 interface of the 5GC). Actually, there may be more than one SFP instance in a DNAI. In case there is more than one SFP instance in a DNAI, according to example embodiments, the SFP instances are associated with SFP load balancing information that tells 5GC (PCF) which SFP instance to use. According to example embodiments, this SFP load balancing information may contain a priority for the SFP(s) served on a DNAI (allowing SFP(s) to work in active/stand-by mode). According to further example embodiments, this SFP load balancing information may contain a load balancing weight (allowing e.g. the PCF to allocate an SFP instance to PDU sessions based on the weight).

According to example embodiments, for each SFP in a SFC, SFP information is defined and contains
- a SFP ID or SFP identifier,
- a "classification" tag (e.g. NSH / VXLAN tag / (GRE) tunnel header) to identify the traffic associated with the SFP,
- optionally, when there are multiple N6 interfaces for the target DNN, the corresponding DNAI (mapping to an N6 interface of 5GC), and
- SFP load balancing information used when two or more SFPs share the same DNAI, but differ at the SF instances involved (as an example, an SFC is defined by the SFs "SF 1", "SF 2", "SF 4"; Two SFPs of this SFC might be: "SFP 1": "SF 1 instance 1", "SF 2 instance 1", "SF 4 instance 1", and "SFP 2": "SF 1 instance 1", "SF 2 instance 2", "SF 4 instance 1").

Example embodiments cover at least the following three alternatives 1 to 3.

In all of these alternatives, according to example embodiments, the NEF exposes APIs for the AF to control service function chaining usage over N6.

According to Alternative 1, the SFC and 5GC management are disjoint. The SCO is an OAM entity able to interface with SFs in the N6-LAN but not able to interface with 5GC NFs.

In Alternative 1, according to example embodiments, SFP(s) together with their SFP information are provided to the AF as output of step A) (SFC/SFP creation) for the AF to provide this information to 5GC as part of step B) (association of user traffic with SFP(s)).

According to Alternative 2, the SCO is an OAM entity able to interface with both SFs in the N6-LAN and 5GC NFs.

In Alternative 2, according to example embodiments, the output of step A) (SFC/SFP creation) refers just to an SFC identifier that can be used later by the AF to refer to traffic steering policies, because 5GC entities can be directly configured by the SCO. Namely, SFP(s) together with their SFP information are provided directly by the SCO to the PCF.

Further, in Alternative 2, according to example embodiments, the mapping from SFC ID to a list of SFP(s) and to their associated "classification" tag (actual identifiers of the traffic associated with an SFP (e.g. NSH / VXLAN tag / (GRE) tunnel header)) is not known by the AF.

According to Alternative 3, step A) and step B) are bundled.

In Alternative 3, according to example embodiments, the AF provides a list of SFs (as part of create request) that must be in the SFC for a given DNN/S-NSSAI with the corresponding traffic filter, and, as applicable, for a given UE identified by a subscription permanent identifier (SUPI) or group of UE(s) identified by an external group ID.

Further, in Alternative 3, according to example embodiments, the NEF authorizes the AF and also the requested SFCs based on policies, and stores the information in a unified data repository (UDR).

Further, in Alternative 3, according to example embodiments, the PCF(s) that have subscribed to AF requests (Data Set = Application Data; Data Subset = SFC influence request information, Data Key = S-NSSAI and DNN and/or internal group identifier or SUPI) receive(s) a "*Nudr_DM_Notify*" notification of data change from the UDR.

Further, in Alternative 3, according to example embodiments, the PCF will build and create policies for SFC considering the SF instances requested by the AF and provide the policies to the SMF for a given PDU session.

According to example embodiments, the SCO may decide to add/remove/change SFP(s). If the SCO adds or removes SFP(s),
- in Alternative 1, according to example embodiments, the SCO notifies the AF, and
- in Alternatives 2 and 3, according to example embodiments, the SCO does not need to notify the AF.

According to example embodiments, the interface from AF to SCO may go via NEF or use another channel.

According to example embodiments, as NEF APIs, the following is proposed:
- an NEF API allowing the AF to contact the SCO in order to create SFC/SFP (step A) above), and
- an NEF API allowing the AF to associate an SFC/SFP with certain traffic and UE(s) (step B) above).

Example embodiments are specified below in more detail.

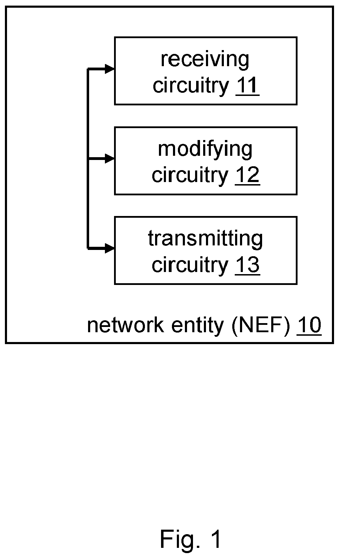

Figure 1 is a block diagram illustrating an apparatus according to at least one example embodiment. The apparatus may be a network node or entity 10 such as a network exposure function entity (or a node or entity hosting or implementing such functionality) comprising a receiving circuitry 11, a modifying circuitry 12, and a transmitting circuitry 13. The receiving circuitry 11 receives a first service function chaining related request from a first network entity. The modifying circuitry 12 modifies a user data repository entity based on content of said first service function chaining related request. The transmitting circuitry 13 transmits a first service function chaining related response towards said first network entity. Here, said service function chaining related request is indicative of one of a demand for creating a service function chain association, a demand for updating said service function chain association, and a demand for deleting said service function chain association.

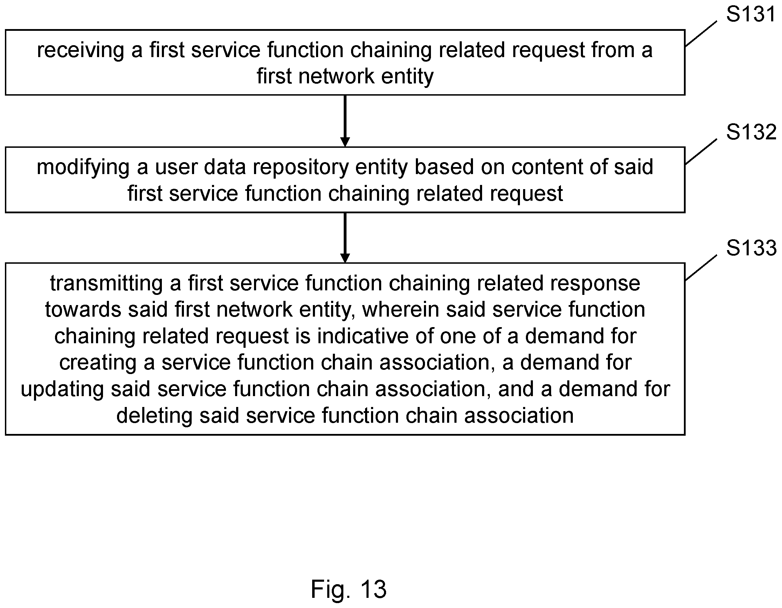

Figure 13 is a schematic diagram of a procedure according to at least one example embodiment. The apparatus according to Figure 1 may perform the method of Figure 13 but is not limited to this method. The method of Figure 13 may be performed by the apparatus of Figure 1 but is not limited to being performed by this apparatus.

As shown in Figure 13, a procedure according to at least one example embodiments comprises an operation of receiving (S131) a first service function chaining related request from a first network entity, an operation of modifying (S132) a user data repository entity based on content of said first service function chaining related request, and an operation of transmitting (S133) a first service function chaining related response towards said first network entity. Here, said service function chaining related request is indicative of one of a demand for creating a service function chain association, a demand for updating said service function chain association, and a demand for deleting said service function chain association.

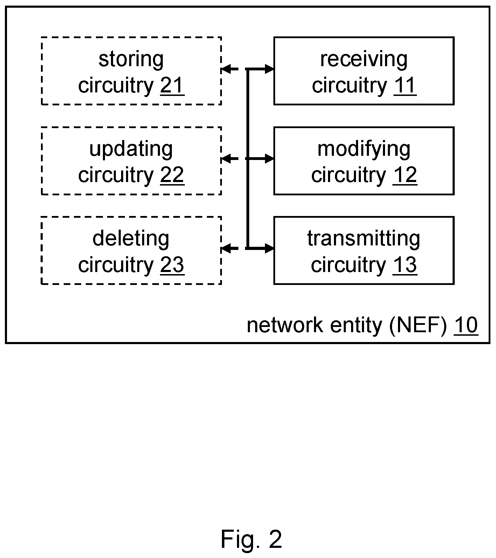

Figure 2 is a block diagram illustrating an apparatus according to at least one example embodiment. In particular, Figure 2 illustrates a variation of the apparatus shown in Figure 1. The apparatus according to Figure 2 may thus further comprise a storing circuitry 21, an updating circuitry 22, and/or a deleting circuitry 23.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to further example embodiments, said first service function chaining related request is indicative of said demand for creating said service function chain association, and said first service function chaining related request includes at least an identifier of a service function chain to be applied to network traffic, information on at least one type of said network traffic, and information on at least one communication endpoint of said network traffic.

According to further example embodiments, said information on at least one communication endpoint of said network traffic includes at least one communication endpoint identifier corresponding to said at least one communication endpoint, a communication endpoint group identifier corresponding to said at least one communication endpoint, and/or a network domain identifier identifying a network domain associated with said at least one communication endpoint.

According to further example embodiments, said first service function chaining related request includes at least information on a service function path which is an instance of said service function chain.

According to further example embodiments, said first service function chaining related request includes at least a transaction identifier identifying said service function chain association.

According to a variation of the procedure shown in Figure 13, details of the modifying operation (S132) are given, which are inherently independent from each other as such.

Such modifying operation (S132) according to example embodiments may comprise an operation of storing said content of said first service function chaining related request to said user data repository entity as an entry labeled with said transaction identifier.

According to further example embodiments, said first service function chaining related request is indicative of said demand for updating said service function chain association, and said first service function chaining related request includes at least a transaction identifier identifying said service function chain association.

According to a variation of the procedure shown in Figure 13, details of the modifying operation (S132) are given, which are inherently independent from each other as such.

Such modifying operation (S132) according to example embodiments may comprise an operation of updating an entry in said user data repository entity labeled with said transaction identifier based on said content of said first service function chaining related request.

According to further example embodiments, said first service function chaining related request is indicative of said demand for deleting said service function chain association, and said first service function chaining related request includes at least a transaction identifier identifying said service function chain association.

According to a variation of the procedure shown in Figure 13, details of the modifying operation (S132) are given, which are inherently independent from each other as such.

Such modifying operation (S132) according to example embodiments may comprise an operation of deleting an entry in said user data repository entity labeled with said transaction identifier.

According to further example embodiments, said information on said service function path contains information on where the service function path is to apply, information on how to forward said network traffic to the service function chain instance corresponding to the service function path, and/or information on load balancing for said service function path defining a relationship of said service function path to other service function paths of said service function chain. The relationship may define a priority or priority order.

According to further example embodiments, said information on how to forward said network traffic to the service function chain includes a network service header, a virtual extensible local area network tag, and/or a generic routing encapsulation tunnel header.

According to a variation of the procedure shown in Figure 13, additional operations are given, which are inherently independent from each other as such. According to such variation, a method according to example embodiments may comprise an operation of receiving a second service function chaining related request from said first network entity, an operation of transmitting said second service function chaining related request towards a second network entity, an operation of receiving a second service function chaining related response from said second network entity, and an operation of transmitting said second service function chaining related response towards said first network entity. The second service function chaining related request may be a request utilizing the Nnef_SFCDefinition service mentioned herein.

According to further example embodiments, said second service function chaining related request is indicative of a demand for a catalogue of service function chains meeting a predetermined criterion, and said second service function chaining related response includes a list including information on at least one service function chain meeting said predetermined criterion.

According to further example embodiments, said information on said at least one service function chain meeting said predetermined criterion includes an identifier of said at least one service function chain.

According to further example embodiments, said information on said at least one service function chain meeting said predetermined criterion includes information on at least one service function of said at least one service function chain, and/or information on a service function path which is an instance of said service function chain.

According to further example embodiments, said second service function chaining related request is indicative of a demand for creation of a new service function chain, and said second service function chaining related response includes an identifier of said new service function chain.

According to further example embodiments, said second service function chaining related request includes information on at least one type of network traffic to which said new service function chain is applicable.

According to further example embodiments, said second service function chaining related response includes information on a service function path which is an instance of said new service function chain.

According to further example embodiments, said first service function chaining related request is received before the second service function chaining request.

According to further example embodiments, said first service function chaining related request is received after the second service function chaining request.

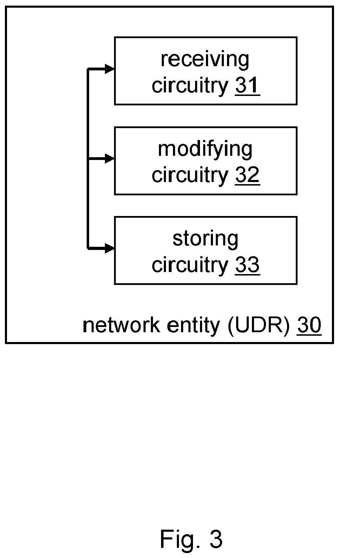

Figure 3 is a block diagram illustrating an apparatus according to at least one example embodiment. The apparatus may be a network node or entity 30 such as a user data repository entity (or a node or entity hosting or implementing such functionality) comprising a receiving circuitry 31, a modifying circuitry 32, and a storing circuitry 33. The receiving circuitry 31 receives, from a network exposure function entity, a service function chaining related user data repository entity modification operation. The modifying circuitry 32 modifies a storage content based on said service function chaining related user data repository entity modification operation. Here, said service function chaining related user data repository entity modification operation is a service function chaining related user data repository entity storing operation including at least a transaction identifier identifying a service function chain association. The storing circuitry 33 stores content of said service function chaining related user data repository entity storing operation as an entry labeled with said transaction identifier.

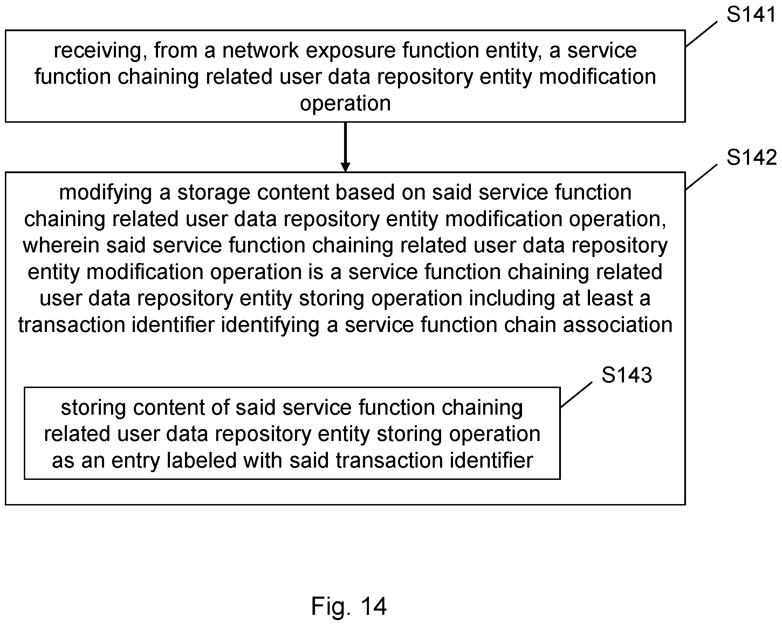

Figure 14 is a schematic diagram of a procedure according to at least one example embodiment. The apparatus according to Figure 3 may perform the method of Figure 14 but is not limited to this method. The method of Figure 14 may be performed by the apparatus of Figure 3 but is not limited to being performed by this apparatus.

As shown in Figure 14, a procedure according to example embodiments comprises an operation of receiving (S141), from a network exposure function entity, a service function chaining related user data repository entity modification operation, and an operation of modifying (S142) a storage content based on said service function chaining related user data repository entity modification operation. Here, said service function chaining related user data repository entity modification operation is a service function chaining related user data repository entity storing operation including at least a transaction identifier identifying a service function chain association. In relation to said modifying operation (S142), the procedure according to example embodiments comprises an operation of storing (S143) content of said service function chaining related user data repository entity storing operation as an entry labeled with said transaction identifier.

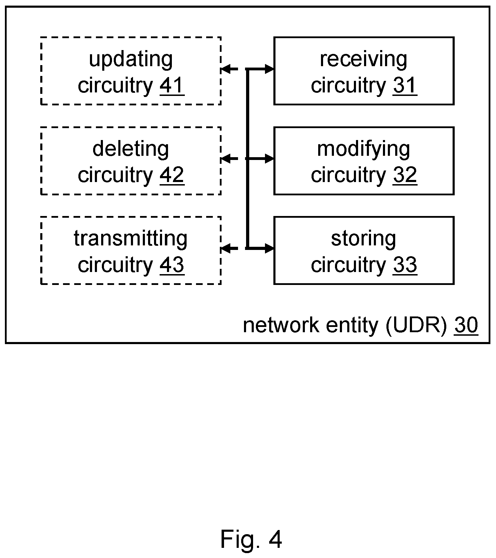

Figure 4 is a block diagram illustrating an apparatus according to at least one example embodiment. In particular, Figure 4 illustrates a variation of the apparatus shown in Figure 3. The apparatus according to Figure 4 may thus further comprise an updating circuitry 41, a deleting circuitry 42, and/or a transmitting circuitry 43.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to further example embodiments, said service function chaining related user data repository entity storing operation includes at least information on at least one communication endpoint to network traffic of which a service function chain according to said service function chain association is to be applied.

According to further example embodiments, said information on at least one communication endpoint includes at least one communication endpoint identifier corresponding to said at least one communication endpoint, a communication endpoint group identifier corresponding to said at least one communication endpoint, and/or a network domain identifier identifying a network domain associated with said at least one communication endpoint.

According to a variation of the procedure shown in Figure 14, details of the modifying operation (S142) are given, which are inherently independent from each other as such. According to this variation, said service function chaining related user data repository entity modification operation is a service function chaining related user data repository entity updating operation including at least said transaction identifier, and such modifying operation (S142) according to example embodiments may comprise an operation of updating an entry labeled with said transaction identifier based on content of said service function chaining related user data repository entity updating operation.

According to a variation of the procedure shown in Figure 14, details of the modifying operation (S142) are given, which are inherently independent from each other as such. According to this variation, said service function chaining related user data repository entity modification operation is a service function chaining related user data repository entity deleting operation including at least said transaction identifier, and such modifying operation (S142) according to example embodiments may comprise an operation of deleting an entry labeled with said transaction identifier.

According to a variation of the procedure shown in Figure 14, additional operations are given, which are inherently independent from each other as such. According to such variation, an method according to example embodiments may comprise an operation of transmitting, towards a policy control function entity, a notification on modification of said storage content.

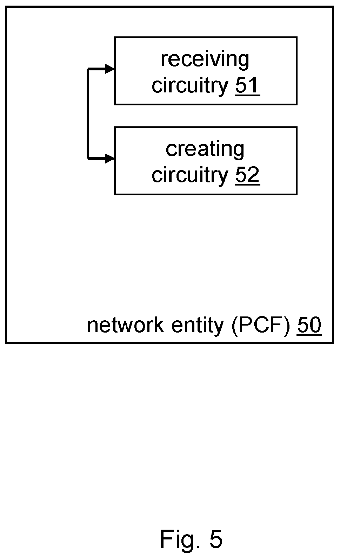

Figure 5 is a block diagram illustrating an apparatus according to at least one example embodiment. The apparatus may be a network node or entity 50 such as a policy control function entity (or a node or entity hosting or implementing such functionality) comprising a receiving circuitry 51 and a creating circuitry 52. The receiving circuitry 51 receives service function chaining information related to a packet data unit session. The creating circuitry 52 creates policy information for said packet data unit session based on said service function chaining information.

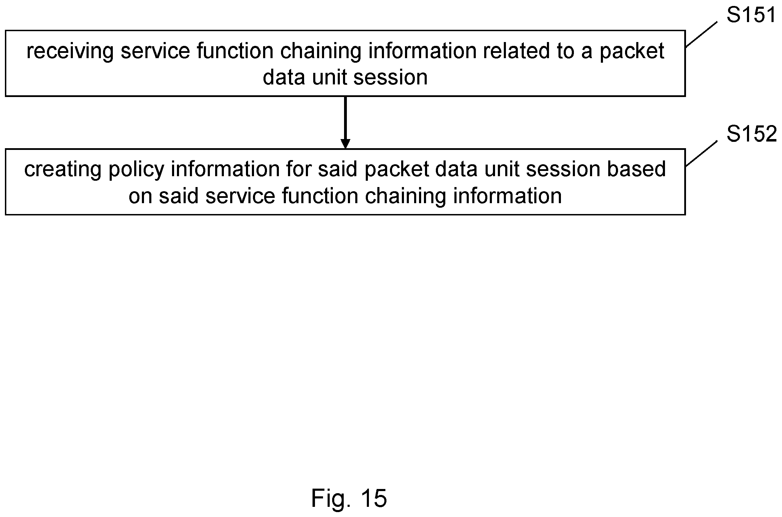

Figure 15 is a schematic diagram of a procedure according to at least one example embodiment. The apparatus according to Figure 5 may perform the method of Figure 15 but is not limited to this method. The method of Figure 15 may be performed by the apparatus of Figure 5 but is not limited to being performed by this apparatus.

As shown in Figure 15, a procedure according to example embodiments comprises an operation of receiving (S151) service function chaining information related to a packet data unit session, and an operation of creating (S152) policy information for said packet data unit session based on said service function chaining information.

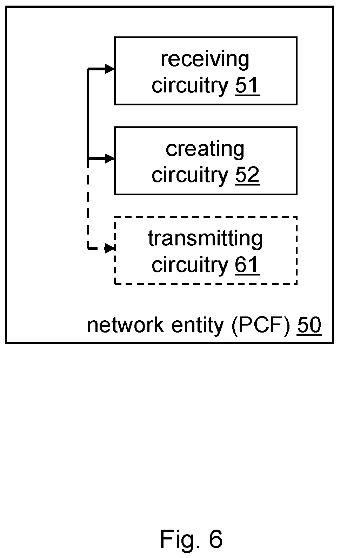

Figure 6 is a block diagram illustrating an apparatus according to at least one example embodiment. In particular, Figure 6 illustrates a variation of the apparatus shown in Figure 5. The apparatus according to Figure 6 may thus further comprise a transmitting circuitry 61.

In an embodiment at least some of the functionalities of the apparatus shown in Figure 5 (or 6) may be shared between two physically separate devices forming one operational entity. Therefore, the apparatus may be seen to depict the operational entity comprising one or more physically separate devices for executing at least some of the described processes.

According to further example embodiments, said service function chaining information includes information on a service function path to be applied to network traffic of said packet data unit session, said service function path being an instance of a service function chain, information on at least one type of said network traffic, information on a marking of said at least one type of said network traffic, and/or information on at least one communication endpoint of said network traffic.

According to a variation of the procedure shown in Figure 15, additional operations are given, which are inherently independent from each other as such. According to such variation, a method according to example embodiments may comprise an operation of transmitting said policy information towards a network entity managing protocol data unit sessions in a mobile network.

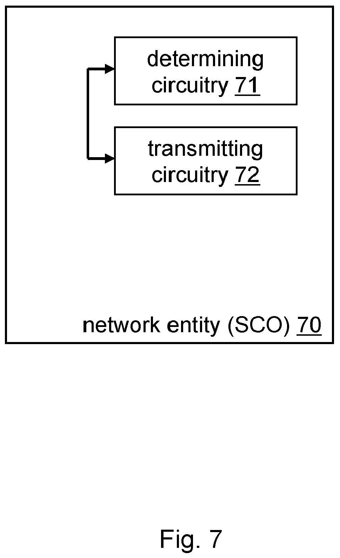

Figure 7 is a block diagram illustrating an apparatus according to example embodiments. The apparatus may be a network node or entity 70 such as a service chain orchestrator entity (or a node or entity hosting or implementing such functionality) comprising a determining circuitry 71 and a transmitting circuitry 72. The determining circuitry 71 determines an association between information on a service function chain comprising at least one service function, information on network traffic to be handled by said service function chain, and information on how to forward said network traffic to the service function chain, wherein said information on network traffic to be handled by said service function chain includes information on a network traffic type and/or a definition of communication endpoints for such traffic. The transmitting circuitry 72 transmits information on said association towards a first network entity facilitating policy control in a network.

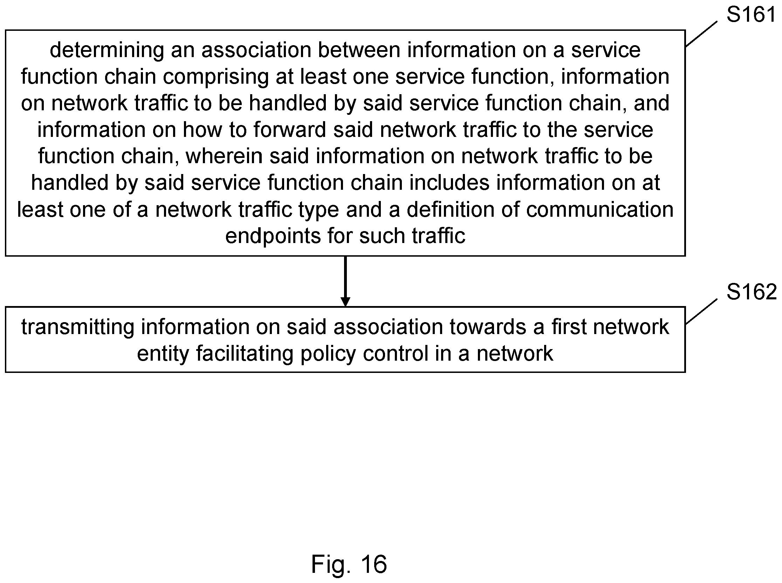

Figure 16 is a schematic diagram of a procedure according to example embodiments. The apparatus according to Figure 7 may perform the method of Figure 16 but is not limited to this method. The method of Figure 16 may be performed by the apparatus of Figure 7 but is not limited to being performed by this apparatus.

As shown in Figure 16, a procedure according to example embodiments comprises an operation of determining (S161) an association between information on a service function chain comprising at least one service function, information on network traffic to be handled by said service function chain, and information on how to forward said network traffic to the service function chain, wherein said information on network traffic to be handled by said service function chain includes information on a network traffic type and/or a definition of communication endpoints for such traffic, and an operation of transmitting (S162) information on said association towards a first network entity facilitating policy control in a network.

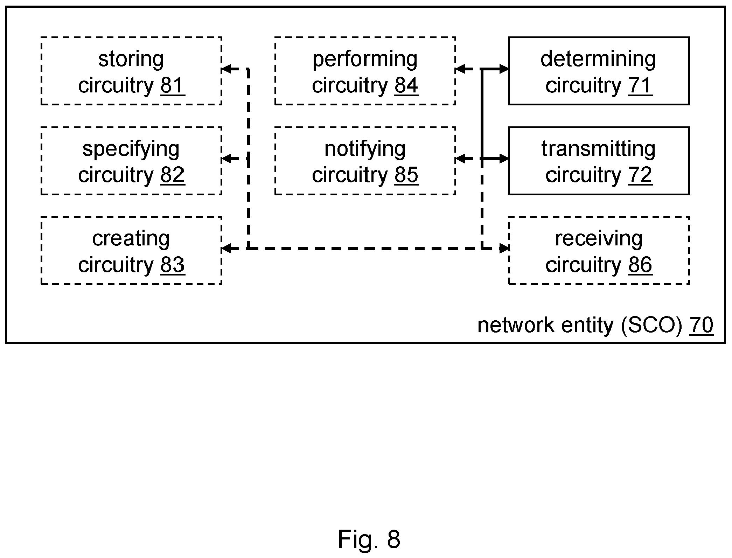

Figure 8 is a block diagram illustrating an apparatus according to at least one example embodiment. In particular, Figure 8 illustrates a variation of the apparatus shown in Figure 7. The apparatus according to Figure 8 may thus further comprise a storing circuitry 81, a specifying circuitry 82, a creating circuitry 83, a performing circuitry 84, a notifying circuitry 85, and/or a receiving circuitry 86.

In an embodiment at least some of the functionalities of the apparatus shown in Figure 7 (or 8) may be shared between two physically separate devices forming one operational entity. Therefore, the apparatus may be seen to depict the operational entity comprising one or more physically separate devices for executing at least some of the described processes.

According to further example embodiments, said network may be a mobile network.

According to further example embodiments, said service function chain is defined by at least one service function and processing flow order information with respect to said service functions, and wherein said service function chain is associated with a service function chain identifier of said service function chain.

According to further example embodiments, said information on how to forward said network traffic to the service function chain or path includes information on headers to be added to such traffic before forwarding it. According to further example embodiments, said definition of the communication endpoints for such traffic refers to a user equipment, a group of user equipment, a slice, a data network name, any user equipment, and/or any user equipment from a given home network.

According to further example embodiments, said association between said information on said service function chain, said information on network traffic to be handled by said service function path, and said information on how to forward said network traffic to the service function chain is defined for different service function paths which are instances of the service function chain, wherein each service function path can be associated with network location where this service function path applies. This may for example be a DNAI.

According to further example embodiments, said association between said information on said service function chain, said information on network traffic to be handled by said service function path, and said information on how to forward said network traffic to the service function chain is defined for different service function paths which are instances of the service function chain, wherein each service function path can be associated with different information on how to forward said network traffic to the service function path.

According to further example embodiments, said service function path is associated with load balancing information for said service function path defining a relationship of said service function path to other service function paths of said service function chain. The relationship may define a priority or priority order.

According to a variation of the procedure shown in Figure 16, details of the transmitting operation (S162) (transmitting information on said association towards a first network entity facilitating policy control in a network) are given, which are inherently independent from each other as such.

Such transmitting operation (S162) according to example embodiments may comprise an operation of storing the information in a data base that can provide the information to this first network entity facilitating policy control. The first network entity may correspond to a policy control function entity mentioned herein.

According to a variation of the procedure shown in Figure 16, details of the determining operation (S161) are given, which are inherently independent from each other as such.

Such determining operation (S161) according to example embodiments may comprise an operation of specifying said association.

According to a variation of the procedure shown in Figure 16, additional operations are given, which are inherently independent from each other as such. According to such variation, a method according to example embodiments may comprise an operation of creating said service function path for said service function chain.

According to further example embodiments, said first network entity is an application function entity.

According to a variation of the procedure shown in Figure 16, additional operations are given, which are inherently independent from each other as such. According to such variation, a method according to example embodiments may comprise an operation of transmitting a service function chain identifier of said service function chain towards said application function entity.

According to a variation of the procedure shown in Figure 16, additional operations are given, which are inherently independent from each other as such. According to such variation, a method according to example embodiments may comprise an operation of transmitting a service function chain identifier of said service function chain towards an application function entity. Alternatively, or in addition, according to such variation, a method according to example embodiments may comprise an operation of transmitting said service function chain identifier of said service function chain towards said first network entity, which may correspond to a policy control function entity mentioned herein.

According to a variation of the procedure shown in Figure 16, additional operations are given, which are inherently independent from each other as such. According to such variation, a method according to example embodiments may comprise an operation of performing a change in relation to said service function chain, and an operation of notifying said application function entity on said change in relation to said service function chain, wherein said change in relation to said service function chain includes addition and/or removal of a certain service function path for said service function chain.

According to a variation of the procedure shown in Figure 16, additional operations are given, which are inherently independent from each other as such. According to such variation, a method according to example embodiments may comprise an operation of receiving, from said application function entity, a request for creation, modification, deletion of said service function chain.

According to further example embodiments, said request includes information on network traffic to be handled by said service function path and information on how to forward said network traffic. Alternatively to including it in the same request, the entity performing this method, e.g. application function entity, might first receive a positive feedback that the service function chain is created and then link the service function chain to traffic. The linking the service function chain to traffic may be effected utilizing the Nnef_SFCInfluence service mentioned herein.

According to a variation of the procedure shown in Figure 16, additional operations are given, which are inherently independent from each other as such. According to such variation, a method according to example embodiments may comprise an operation of receiving a request for a catalogue of service function chains meeting a predetermined criterion, an operation of determining all service function chains matching said predetermined criterion, and an operation of returning said catalogue including all matching service function chains.

According to a variation of the procedure shown in Figure 16, additional operations are given, which are inherently independent from each other as such. According to such variation, a method according to example embodiments may comprise an operation of transmitting a request for a catalogue of service function chains matching a predetermined criterion, and an operation of receiving said catalogue including said service function chain.

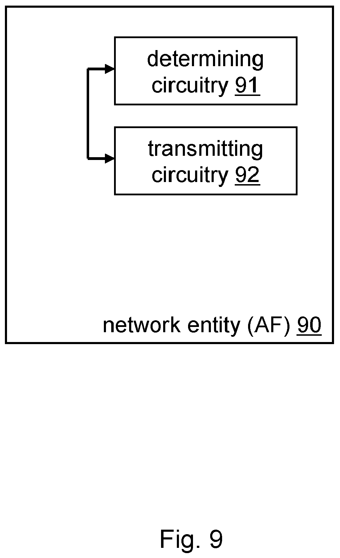

Figure 9 is a block diagram illustrating an apparatus according to at least one example embodiment. The apparatus may be a network node or entity 90 such as an application function entity (or a node or entity hosting or implementing such functionality) comprising a determining circuitry 91 and a transmitting circuitry 92. The determining circuitry 91 determines an association between information on a service function chain comprising at least one service function, information on network traffic to be handled by said service function chain, and information on how to forward said network traffic to the service function chain, wherein said information on network traffic to be handled by said service function chain includes information on a network traffic type and/or a definition of communication endpoints for such traffic. The transmitting circuitry 92 transmits information on said association towards a first network entity facilitating policy control in a network.

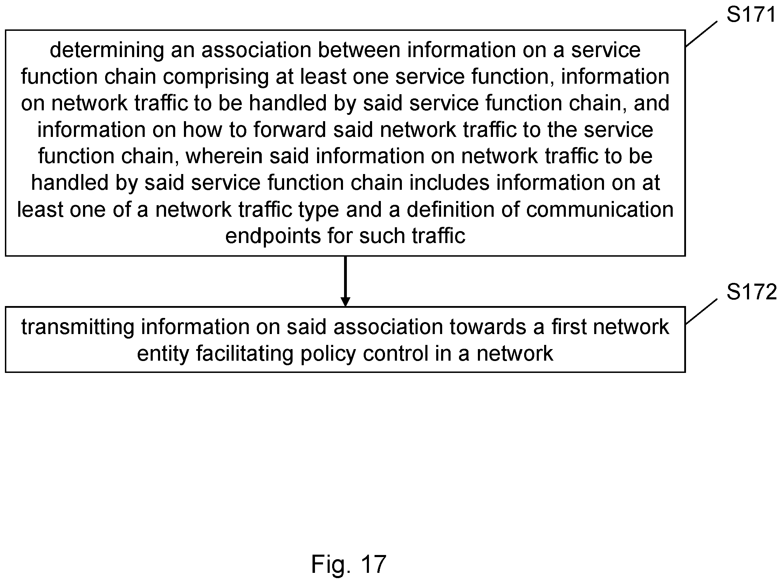

Figure 17 is a schematic diagram of a procedure according to example embodiments. The apparatus according to Figure 9 may perform the method of Figure 17 but is not limited to this method. The method of Figure 17 may be performed by the apparatus of Figure 9 but is not limited to being performed by this apparatus.

As shown in Figure 17, a procedure according to example embodiments comprises an operation of determining (S171) an association between information on a service function chain comprising at least one service function, information on network traffic to be handled by said service function chain, and information on how to forward said network traffic to the service function chain, wherein said information on network traffic to be handled by said service function chain includes information on a network traffic type and/or a definition of communication endpoints for such traffic, and an operation of transmitting (S172) information on said association towards a first network entity facilitating policy control in a network.

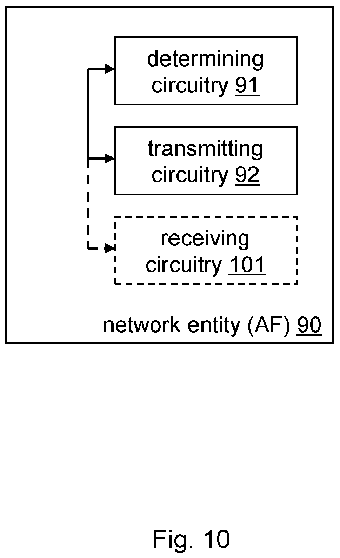

Figure 10 is a block diagram illustrating an apparatus according to example embodiments. In particular, Figure 10 illustrates a variation of the apparatus shown in Figure 9. The apparatus according to Figure 10 may thus further comprise a receiving circuitry 101.

In an embodiment at least some of the functionalities of the apparatus shown in Figure 9 (or 10) may be shared between two physically separate devices forming one operational entity. Therefore, the apparatus may be seen to depict the operational entity comprising one or more physically separate devices for executing at least some of the described processes.

According to further example embodiments, said network may be a mobile network.

According to further example embodiments, said service function chain is defined by at least one service function and processing flow order information with respect to said service functions, and wherein said service function chain is associated with a service function chain identifier of said service function chain.

According to further example embodiments, said information on how to forward said network traffic to the service function chain or path includes information on headers to be added to such traffic before forwarding it.

According to further example embodiments, said definition of the communication endpoints for such traffic refers to a user equipment, a group of user equipment, a slice, a data network name, any user equipment, and/or any user equipment from a given home network.

According to further example embodiments, said association between said information on said service function chain, said information on network traffic to be handled by said service function path, and said information on how to forward said network traffic to the service function chain is defined for different service function paths which are instances of the service function chain, wherein each service function path can be associated with network location where this service function path applies. This may for example be a DNAI.

According to further example embodiments, said association between said information on said service function chain, said information on network traffic to be handled by said service function path, and said information on how to forward said network traffic to the service function chain is defined for different service function paths which are instances of the service function chain, wherein each service function path can be associated with different information on how to forward said network traffic to the service function path.

According to further example embodiments, said service function path is associated with load balancing information for said service function path defining a relationship of said service function path to other service function paths of said service function chain. The relationship may define a priority or priority order.

According to a variation of the procedure shown in Figure 17, details of the transmitting operation (S172) (transmitting information on said association towards a first network entity facilitating policy control in a network) are given, which are inherently independent from each other as such.

Such transmitting operation (S172) according to example embodiments may comprise an operation of storing the information in a data base that can provide the information to this first network entity facilitating policy control. The first network entity may correspond to a policy control function mentioned herein.

According to a variation of the procedure shown in Figure 17, details of the determining operation (S171) are given, which are inherently independent from each other as such.

Such determining operation (S171) according to example embodiments may comprise an operation of receiving said information on said association.

According to a variation of the procedure shown in Figure 17, additional operations are given, which are inherently independent from each other as such. According to such variation, a method according to example embodiments may comprise an operation of transmitting a request for creation of said service function chain.

According to further example embodiments, said request includes information on network traffic to be handled by said created service function path.

According to a variation of the procedure shown in Figure 17, additional operations are given, which are inherently independent from each other as such. According to such variation, a method according to example embodiments may comprise an operation of transmitting a request for application of said service function chain to said network traffic towards said communication endpoints towards said first network entity.

According to a variation of the procedure shown in Figure 17, additional operations are given, which are inherently independent from each other as such. According to such variation, a method according to example embodiments may comprise an operation of transmitting a request for a catalogue of service function chains matching a predetermined criterion, and an operation of receiving said catalogue including said service function chain.

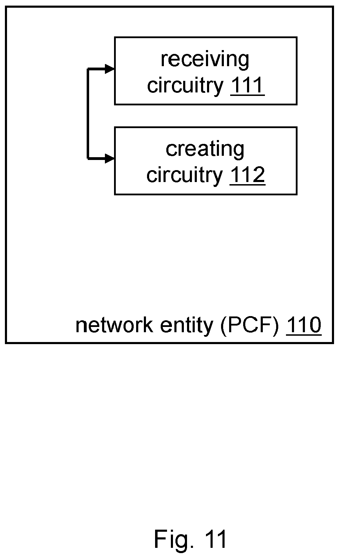

Figure 11 is a block diagram illustrating an apparatus according to at least one example embodiment. The apparatus may be a network node or entity 110 such as a policy control function entity (or a node or entity hosting or implementing such functionality) comprising a receiving circuitry 111 and a creating circuitry 112. The receiving circuitry 111 receives information on an association between information on a service function path which is an instance of a service function chain comprising at least one service function and information on network traffic to be handled by said service function path and information on how to forward said network traffic, wherein said information on network traffic to be handled by said service function path includes information on a combination of a network traffic type and communication endpoints. The creating circuitry 112 creates policy information based on said information on said association.

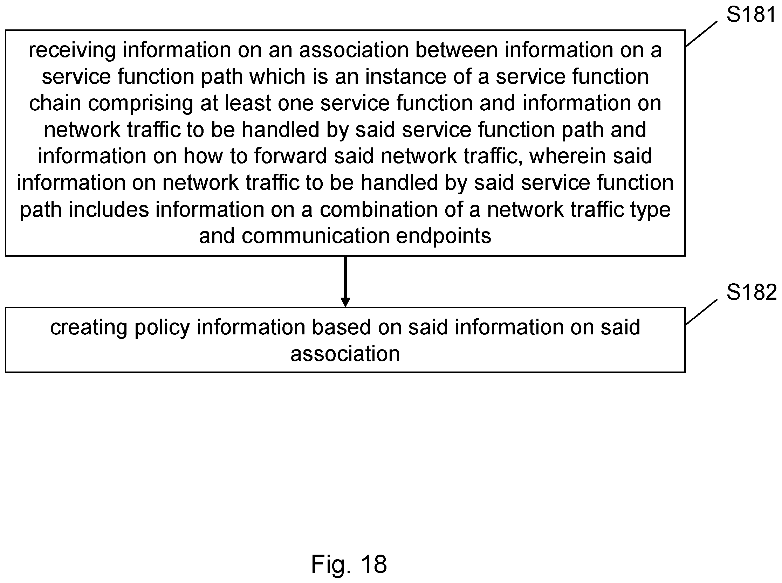

Figure 18 is a schematic diagram of a procedure according to example embodiments. The apparatus according to Figure 11 may perform the method of Figure 18 but is not limited to this method. The method of Figure 18 may be performed by the apparatus of Figure 11 but is not limited to being performed by this apparatus.

As shown in Figure 18, a procedure according to example embodiments comprises an operation of receiving (S181) information on an association between information on a service function path which is an instance of a service function chain comprising at least one service function and information on network traffic to be handled by said service function path and information on how to forward said network traffic, wherein said information on network traffic to be handled by said service function path includes information on a combination of a network traffic type and communication endpoints, and an operation of creating (S182) policy information based on said information on said association.

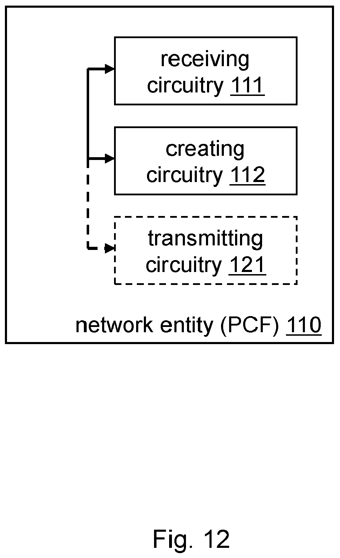

Figure 12 is a block diagram illustrating an apparatus according to at least one example embodiment. In particular, Figure 12 illustrates a variation of the apparatus shown in Figure 11. The apparatus according to Figure 12 may thus further comprise a transmitting circuitry 121.

In an embodiment at least some of the functionalities of the apparatus shown in Figure 11 (or 12) may be shared between two physically separate devices forming one operational entity. Therefore, the apparatus may be seen to depict the operational entity comprising one or more physically separate devices for executing at least some of the described processes.

According to a variation of the procedure shown in Figure 18, additional operations are given, which are inherently independent from each other as such. According to such variation, a method according to example embodiments may comprise an operation of transmitting said policy information towards a network entity managing protocol data unit sessions in a network. The network entity managing protocol data unit sessions in a network may correspond to a session management function entity mentioned herein.

According to further example embodiments, said network may be a mobile network.

According to a variation of the procedure shown in Figure 18, additional operations are given, which are inherently independent from each other as such. According to such variation, a method according to example embodiments may comprise an operation of receiving a request for application of said service function chain to said network traffic towards said communication endpoints.

Example embodiments outlined and specified above are explained below in more specific terms.

In particular, according to example embodiments, an SCO is provided as follows.

Such SCO according to example embodiments offers an API to AFs to discover available SFC(s) and to request the creation of new dynamic SFCs. This API may be reached via the NEF.

Assuming that the new SFC is successfully created, in Alternative 1, the SCO returns to the AF
- an identifier of the newly instantiated SFC (SFC ID), and
- one or more SFP(s) together with their SFP information.

Assuming that the new SFC is successfully created, in Alternative 2, the SCO returns to the AF
- an identifier of the newly instantiated SFC (SFC ID).

For each SFP, according to example embodiments, the SCO controls a service flow forwarder to create, delete or modify transport/user plane connectivity between the SFs themselves and also to handle traffic coming from UPF(s), e.g., traffic sent from UPF(s) with the "classification" tags to identify (e.g., NSH / VXLAN tag / (GRE) tunnel header) the traffic associated with the SFP.

In Alternative 2, according to example embodiments, the SCO may directly update the PCF to provide the PCF with similar information as provided back to the AF in Alternative 1, e.g,
- an identifier of the newly instantiated SFC (SFC ID), and
- one or more SFP(s) for the newly created SFC with the respective SFP information.

Further, according to example embodiments, for NEF, new northbound services (APIs) are provided as follows.

In particular, according to example embodiments, a new northbound service called "*Nnef_SFCDefinition*" and a new northbound service called *"Nnef_SFCInfluence"* are defined.

In detail, according to example embodiments, the SCO is reached via the NEF which provides the northbound service "*Nnef_SFCDefinition*" that allows an AF to discover, create, modify, and delete SFCs. An AF could also subscribe to be notified when new SFCs are deployed or existing SFCs are undeployed/modified.

The "*Nnef_SFCDefinition*" service allows AFs that are not able to interface with the SCO to request the creation of a new SFC via NEF. NEF forwards the request to the SCO and when the SCO, assuming successful SFC instantiation, returns the ID of the created SFC, it forwards the SFC ID of the newly created SFC to the AF. Optionally, to support Alternative 1, according to example embodiments, the API may return the list of SFP(s) and for each of them the corresponding SFP information.

Further, according to example embodiments, in particular for supporting step B) mentioned above, the northbound service *"Nnef_SFCInfluence"* allows an AF to associate the SFC and SFP(s) with certain traffic (identified by traffic filters) and UE(s) (e.g. traffic of a UE, a group of UEs, a (set of) DNN/SNSSAI pair, etc.). Optionally, to support Alternative 1, according to example embodiments, it allows an AF to provide SFP(s) and their associated SFP information (as received from SCO possibly via NEF).

When *"Nnef_SFCInfluence"* targets multiple UE(s), the NEF stores the AF policy in an UDR record whose key corresponds to the description of the set of UE targets.

PCF(s) that have subscribed to modifications of AF requests (Data Set = Application Data; Data Subset = SFC influence request information, Data Key = S-NSSAI and DNN and/or internal group identifier or SUPI) receive(s) a "*Nudr_DM_Notify*" notification of data change from the UDR.

According to example embodiments, the keys for these data in UDR may be structured as shown in the table below.

| | |
|---|---|
| AF *"Nnef_SFCInfluence"* information | AF transaction internal ID |
| | S-NSSAI and DNN and/or Internal Group Identifier or SUPI |

Further, according to example embodiments, TSPs are enhanced with SFPs including SFP information, which are called "extended" TSPs.

Further, according to example embodiments, PCC rules may be extended to convey the "extended" TSPs (which for example include SFPs with priorities).

Further, according to example embodiments, N4 rules may be extended to convey the "extended" TSPs to the UPF for enforcement.

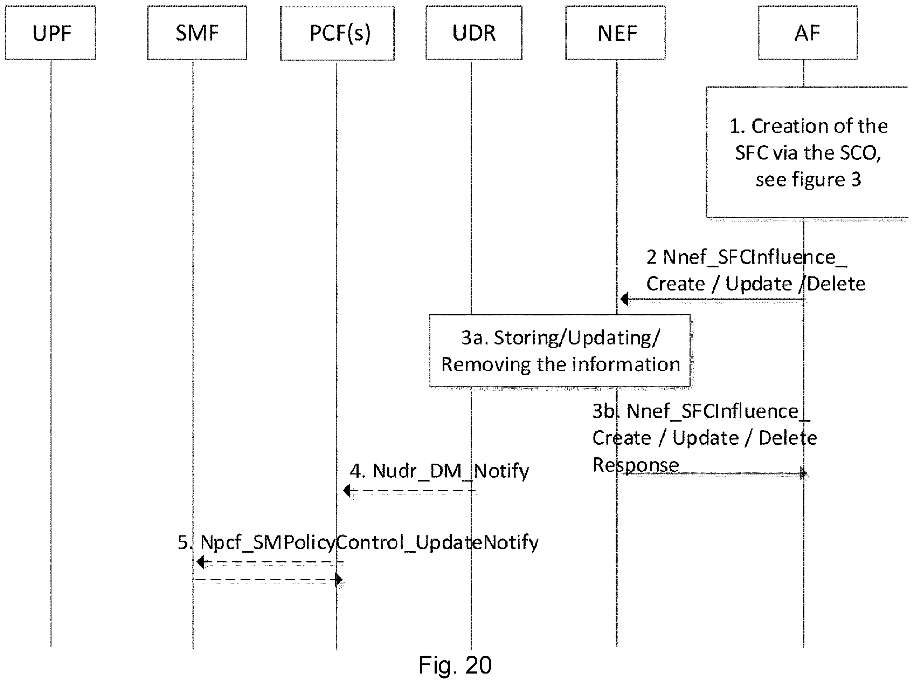

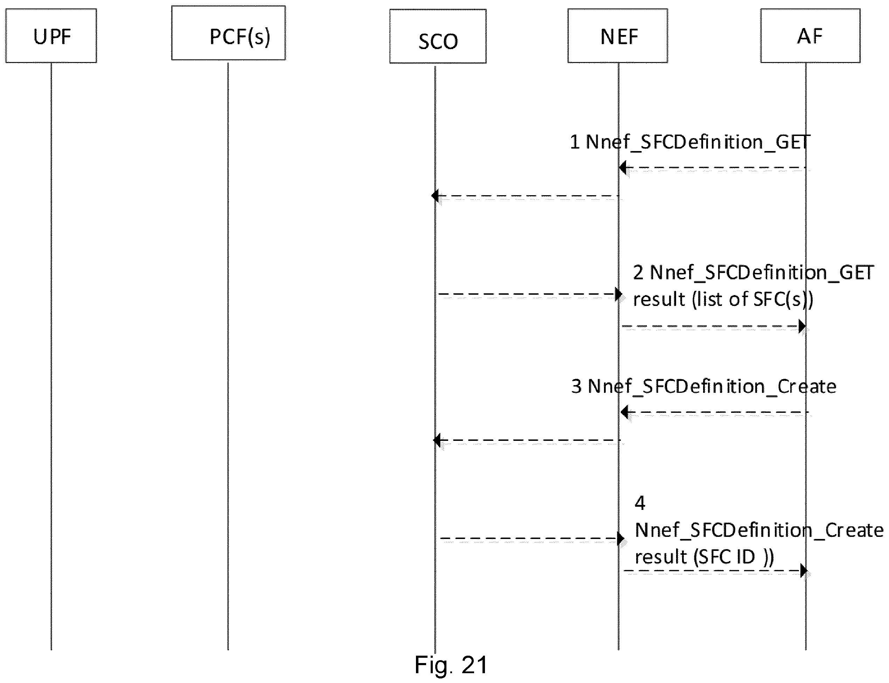

Figures 20 and 21 show schematic diagrams of signaling sequences according to example embodiments.

In particular, Figure 20 illustrates associating the SFC and SFP(s) with certain traffic and UE(s). Further, Figure 21 illustrates discovering/creating SFC(s).

Any AF interaction with the network (e.g. with NEF) may depend upon proper authentication/authorization of the AF. Such authentication/authorization may be implemented with state of the art AF authentication/authorization mechanisms.

In a step 1 of Figure 20, according to example embodiments, an AF decides that a new SFC is to be created. The AF consumes an API exposed by SCO (possibly via the NEF in which case this is using "*Nnef_SFCDefinition_Create*"*)* to request the creation of a new SFC. The request may also include N6 instances (identified e.g. by DNAI(s)), where instances of this SFC (e.g. SFP(s)) are to be created. Which traffic would apply to the new SFC is not needed by the SCO, however, the AF might also include such information to the request.

The SCO creates the SFC and, at minimum, the SCO returns the SFC ID to the AF. As Alternative 1, the SCO may also return SFPs applicable to the SFC. In this case, each SFP is associated with the SFP information.

Figure 21 particularly illustrates details of step 1 of Figure 20. According to example embodiments, these may replace or supplement the description of step 1 of Figure 20 above.

In a step 1 of Figure 21, according to example embodiments, the AF may, using "*Nnef_SFCDefinition_GET*"*,* request a catalog/list of existing SFC(s) matching some criteria (such as SFC involving NFx and NFy; the criteria could also list all existing SFC(s)). The NEF validates the request and forwards it to the SCO together with information on the AF ID and on the allowed scope (DNN, S-NSSAI) for the request.

In a step 2 of Figure 21, according to example embodiments, the SCO responds with the list of SFC(s) that
- match the criteria set by the AF, or
- are allowed for the AF (for example, that apply to the slices and AF ID indicated by the NEF).

According to example embodiments, the SCO response contains a list of SFC(s) with at least their SFC ID, the ordered set of NFs of the SFC, and possibly, when Alternative 1 applies, the associated SFP(s) together with their SFP information.

This response is forwarded by the NEF using "*Nnef_SFCDefinition_GET*" result.

If there is a SFC that meets the AF requirements, the AF can immediately proceed to step 2 of Figure 20, e.g., without requesting creation of a new SFC. Otherwise, the AF may proceed with the subsequent step 3 of Figure 21.

In the step 3 of Figure 21, according to example embodiments, the AF may, using "*Nnef_SFCDefinition_Create*"*,* request a new SFC, as discussed in step 1 of Figure 20 above.

In a step 4 of Figure 21, according to example embodiments, as discussed in step 1 of Figure 20 above, once created, the SCO returns the SFC ID (potentially together with SFPs applicable to the SFC).

This response is forwarded by the NEF using "*Nnef_SFCDefinition_Create*" result.

Returning to Figure 20, in a step 2 of Figure 20, according to example embodiments, the AF issues an "*Nnef_SFCInfluence_Create*" request. Among other pieces of information, the SFC profile includes traffic filters of the traffic to which the SFC applies, the identification of the target UE(s) (one UE a group of UE(s) or any UE), possibly the target DNN, S-NSSAI (if this is not provided by the AF, the NEF determines the target DNN(s), S-NSSAI(s) based on the AF ID or AF identifier), and optionally (for Alternative 1) SFPs and their SFP information. The request contains also an AF transaction ID.

To update or remove an existing request, the AF invokes a "*Nnef_SFCInfluence_Update*" or "*Nnef_SFCInfluence_Delete*" service operation providing the corresponding AF transaction ID.

If the request is sent directly from the AF to the PCF, the AF reaches the PCF selected for the existing PDU session by configuration or by invoking "*Nbsf_management_Discovery*" service. For such case, according to example embodiments, the "*Npcf_PolicyAuthorization*" service can be extended to support the scenario where AF/NEF requests to apply an SFC on a single UE identified by its IP address. The extended "*Npcf_PolicyAuthorization*" service allows a direct interaction between AF/NEF and PCF. After AF/NEF discovers the involved PCF(s), it consumes the extended "*Npcf_SMPolicyControl*" service to update the policy in the PCF(s).

According to example embodiments, the NEF ensures the necessary authorization control, including throttling of AF requests and mapping between the information provided by the AF and information needed by the 5GC (this may be implemented as specified in 3GPP TS 23.502).

In a step 3a of Figure 20, according to example embodiments, in case of "*Nnef_SFCInfluence_Create*" or "*Nnef_SFCInfluence_Update*" as discussed above in relation to step 2 of Figure 20, the NEF stores the AF request information in the UDR (Data Set = Application Data; Data Subset = AF SFC influence request information, Data Key = AF Transaction Internal ID, S-NSSAI and DNN and/or internal group identifier or SUPI).

Each of the AF Transaction Internal ID and the S-NSSAI and DNN and/or the internal group identifier or SUPI are regarded as Data Key when the AF request information is stored into the UDR.

In the step 3a of Figure 20, according to example embodiments, in case of "*Nnef_SFCInfluence_Delete*" as discussed above in relation to step 2 of Figure 20, the NEF deletes the AF requirements in the UDR (Data Set = Application Data; Data Subset = AF SFC influence request information, Data Key = AF Transaction Internal ID).

In a step 3b of Figure 20, according to example embodiments, the NEF responds to the AF with a "*Nnef_SFCInfluence_Create*" response or "*Nnef_SFCInfluence_Update*" response or "*Nnef_SFCInfluence_Delete*" response, as applicable.

In a step 4 of Figure 20, according to example embodiments, the PCF(s) that have subscribed to modifications of AF requests (Data Set = Application Data; Data Subset = AF SFC influence request information, Data Key = S-NSSAI and DNN and/or internal group identifier or SUPI) receive(s) a "*Nudr_DM_Notify*" notification of data change from the UDR.

Finally, in a step 5 of Figure 20, according to example embodiments, the PCF determines if existing PDU sessions are potentially impacted by the AF request. For each of these (potentially impacted) PDU sessions, the PCF updates the SMF with corresponding new policy information about the PDU session by invoking an "*Npcf_SMPolicyControl_UpdateNotify*" service operation (this may be implemented as specified in 3GPP TS 23.502).

According to example embodiments, when the updated policy information about the PDU session is received from the PCF, the SMF may take appropriate actions to reconfigure the user plane of the PDU session.

The above-described procedures and functions may be implemented by respective functional elements, processors, or the like, as described below.

In the foregoing description of the network entity, units that are relevant for understanding the principles described herein have been described using functional blocks. The network entity may comprise further units that are utilized for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, e.g. network node or entity (or some other means) is configured to perform some function, this is to be construed to be a description stating that a (e.g. at least one) processor or corresponding circuitry, potentially in cooperation with computer program code stored in the memory of the respective apparatus, is configured to cause the apparatus to perform at least the thus mentioned function.

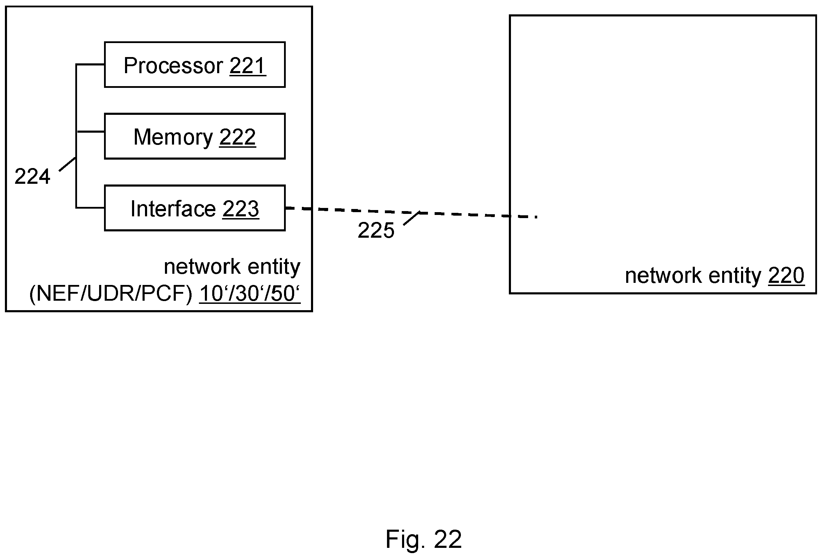

In Figure 22, an alternative illustration of apparatuses according to at least one example embodiment is depicted. As indicated in Figure 22, according to example embodiments, the apparatus (network node or entity) 10' (corresponding to the network node or entity 10) comprises a processor 221, a memory 222 and an interface 223, which are connected by a bus 224 or the like. Further, according to example embodiments, the apparatus (network node or entity) 30' (corresponding to the network node or entity 30) comprises a processor 221, a memory 222 and an interface 223, which are connected by a bus 224 or the like. Further, according to example embodiments, the apparatus (network node or entity) 50' (corresponding to the network node or entity 50) comprises a processor 221, a memory 222 and an interface 223, which are connected by a bus 224 or the like. The apparatuses may respectively be connected via link 225 with another apparatus, e.g. another network node or entity 220, in particular with an interface of said another network node or entity 220.

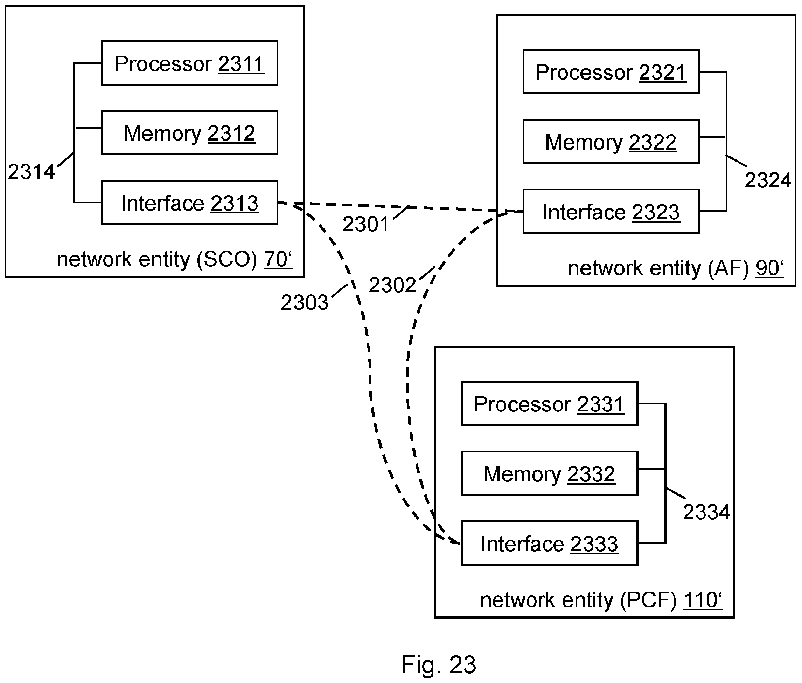

In Figure 23, an alternative illustration of apparatuses according to example embodiments is depicted. As indicated in Figure 23, according to example embodiments, the apparatus (network node or entity) 70' (corresponding to the network node or entity 70) comprises a processor 2311, a memory 2312 and an interface 2313, which are connected by a bus 2314 or the like. Further, according to example embodiments, the apparatus (network node or entity) 90' (corresponding to the network node or entity 90) comprises a processor 2321, a memory 2322 and an interface 2323, which are connected by a bus 2324 or the like. Further, according to example embodiments, the apparatus (network node or entity) 110' (corresponding to the network node or entity 110) comprises a processor 2331, a memory 2332 and an interface 2333, which are connected by a bus 2334 or the like. The apparatuses may be connected via link 2301, 2302, 2303, respectively.

The processor 221/2311/2321/2331 and/or the interface 223/2313/2323/2333 may also include a modem or the like to facilitate communication over a (hardwire or wireless) link, respectively. The interface 223/2313/2323/2333 may include a suitable transceiver coupled to one or more antennas or communication means for (hardwire or wireless) communications with the linked or connected device(s), respectively. The interface 223/2313/2323/2333 is generally configured to communicate with at least one other apparatus, e.g. the interface thereof.

The memory 222/2312/2322/2332 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be a description stating that at least one processor, potentially in cooperation with computer program code stored in the memory of the respective apparatus, is configured to cause the apparatus to perform at least the thus mentioned function.

According to example embodiments, an apparatus representing the network node or entity 10 comprises at least one processor 221, at least one memory 222 including computer program code, and at least one interface 223 configured for communication with at least another apparatus. The processor (e.g. the at least one processor 221, with the at least one memory 222 and the computer program code) is configured to perform receiving a first service function chaining related request from a first network entity (thus the apparatus comprising corresponding means for receiving), to perform modifying a user data repository entity based on content of said first service function chaining related request (thus the apparatus comprising corresponding means for modifying), and to perform transmitting a first service function chaining related response towards said first network entity, wherein said service function chaining related request is indicative of one of a demand for creating a service function chain association, a demand for updating said service function chain association, and a demand for deleting said service function chain association (thus the apparatus comprising corresponding means for transmitting).

According to example embodiments, an apparatus representing the network node or entity 30 comprises at least one processor 221, at least one memory 222 including computer program code, and at least one interface 223 configured for communication with at least another apparatus. The processor (e.g. the at least one processor 221, with the at least one memory 222 and the computer program code) is configured to perform receiving, from a network exposure function entity, a service function chaining related user data repository entity modification operation (thus the apparatus comprising corresponding means for receiving), to perform modifying a storage content based on said service function chaining related user data repository entity modification operation, wherein said service function chaining related user data repository entity modification operation is a service function chaining related user data repository entity storing operation including at least a transaction identifier identifying a service function chain association (thus the apparatus comprising corresponding means for modifying), and to perform (relation to said modifying) storing content of said service function chaining related user data repository entity storing operation as an entry labeled with said transaction identifier (thus the apparatus comprising corresponding means for storing).

According to example embodiments, an apparatus representing the network node or entity 50 comprises at least one processor 221, at least one memory 222 including computer program code, and at least one interface 223 configured for communication with at least another apparatus. The processor (e.g. the at least one processor 221, with the at least one memory 222 and the computer program code) is configured to perform receiving service function chaining information related to a packet data unit session (thus the apparatus comprising corresponding means for receiving), and to perform creating policy information for said packet data unit session based on said service function chaining information (thus the apparatus comprising corresponding means for creating).

According to example embodiments, an apparatus representing the network node or entity 70 comprises at least one processor 2311, at least one memory 2312 including computer program code, and at least one interface 2312 configured for communication with at least another apparatus. The processor (e.g. the at least one processor 2311, with the at least one memory 2312 and the computer program code) is configured to perform determining an association between information on a service function chain comprising at least one service function, information on network traffic to be handled by said service function chain, and information on how to forward said network traffic to the service function chain, wherein said information on network traffic to be handled by said service function chain includes information on a network traffic type and/or a definition of communication endpoints for such traffic (thus the apparatus comprising corresponding means for determining), and to perform transmitting information on said association towards a first network entity facilitating policy control in a network (thus the apparatus comprising corresponding means for transmitting).

According to example embodiments, an apparatus representing the network node or entity 90 comprises at least one processor 2321, at least one memory 2322 including computer program code, and at least one interface 2323 configured for communication with at least another apparatus. The processor (e.g. the at least one processor 2321, with the at least one memory 2322 and the computer program code) is configured to perform determining an association between information on a service function chain comprising at least one service function, information on network traffic to be handled by said service function chain, and information on how to forward said network traffic to the service function chain, wherein said information on network traffic to be handled by said service function chain includes information on a network traffic type and/or a definition of communication endpoints for such traffic (thus the apparatus comprising corresponding means for determining), and to perform transmitting information on said association towards a first network entity facilitating policy control in a network (thus the apparatus comprising corresponding means for transmitting).

According to example embodiments, an apparatus representing the network node or entity 110 comprises at least one processor 2331, at least one memory 2332 including computer program code, and at least one interface 2333 configured for communication with at least another apparatus. The processor (e.g. the at least one processor 2331, with the at least one memory 2332 and the computer program code) is configured to perform receiving information on an association between information on a service function path which is an instance of a service function chain comprising at least one service function and information on network traffic to be handled by said service function path and information on how to forward said network traffic, wherein said information on network traffic to be handled by said service function path includes information on a combination of a network traffic type and communication endpoints (thus the apparatus comprising corresponding means for receiving), and to perform creating policy information based on said information on said association (thus the apparatus comprising corresponding means for creating).

For further details regarding the operability/functionality of the individual apparatuses, reference is made to the above description in connection with any one of Figures 1 to 21, respectively.

As described herein, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements as described herein can be implemented by any means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

Any combination of method steps and operations described herein, and any combination of nodes, apparatuses, modules or elements described herein, are applicable.

In view of the above, there are provided measures for service function chaining enhancement. Such measures may, for example, comprise receiving a first service function chaining related request from a first network entity, modifying a user data repository entity based on content of said first service function chaining related request, and transmitting a first service function chaining related response towards said first network entity, wherein said service function chaining related request is indicative of one of a demand for creating a service function chain association, a demand for updating said service function chain association, and a demand for deleting said service function chain association.

Even though the example embodiments are described above with reference to the accompanying drawings, it is to be understood that the example embodiment are not restricted thereto. Rather, various modifications may be apparent to those skilled in the art without departing from the scope of the example embodiments.

The present disclosure provides details for, among others, the following examples:
Example 1. A method of a network exposure function entity, the method comprising
   receiving a first service function chaining related request from a first network entity,
   modifying a user data repository entity based on content of said first service function chaining related request, and
   transmitting a first service function chaining related response towards said first network entity, wherein
   said service function chaining related request is indicative of one of a demand for creating a service function chain association, a demand for updating said service function chain association, and a demand for deleting said service function chain association.
Example 2. The method according to example 1, wherein
   said first service function chaining related request is indicative of said demand for creating said service function chain association, and
   said first service function chaining related request includes at least an identifier of a service function chain to be applied to network traffic,
      information on at least one type of said network traffic, and
      information on at least one communication endpoint of said network traffic.
Example 3. The method according to example 2, wherein
   said information on at least one communication endpoint of said network traffic includes at least one of
   at least one communication endpoint identifier corresponding to said at least one communication endpoint,
   a communication endpoint group identifier corresponding to said at least one communication endpoint, and
   a network domain identifier identifying a network domain associated with said at least one communication endpoint.
Example 4. The method according to example 2 or 3, wherein
   said first service function chaining related request includes at least information on a service function path which is an instance of said service function chain.
Example 5. The method according to any of examples 2 to 4, wherein
   said first service function chaining related request includes at least a transaction identifier identifying said service function chain association.
Example 6. The method according to example 5, wherein
   in relation to said modifying said user data repository entity, the method further comprises
   storing said content of said first service function chaining related request to said user data repository entity as an entry labeled with said transaction identifier.
Example 7. The method according to example 1, wherein
   said first service function chaining related request is indicative of said demand for updating said service function chain association, and
   said first service function chaining related request includes at least a transaction identifier identifying said service function chain association.
Example 8. The method according to example 7, wherein
   in relation to said modifying said user data repository entity, the method further comprises
   updating an entry in said user data repository entity labeled with said transaction identifier based on said content of said first service function chaining related request.
Example 9. The method according to example 1, wherein
   said first service function chaining related request is indicative of said demand for deleting said service function chain association, and
   said first service function chaining related request includes at least a transaction identifier identifying said service function chain association.
Example 10. The method according to example 9, wherein
   in relation to said modifying said user data repository entity, the method further comprises
   deleting an entry in said user data repository entity labeled with said transaction identifier.
Example 11. The method according to example 4, wherein
   said information on said service function path contains at least one of
   information on where the service function path is to apply,
   information on how to forward said network traffic to the service function chain instance corresponding to the service function path, and
   information on load balancing for said service function path defining a relationship of said service function path to other service function paths of said service function chain.
Example 12. The method according to example 11, wherein
   said information on how to forward said network traffic to the service function chain includes at least one of
   a network service header,
   a virtual extensible local area network tag, and
   a generic routing encapsulation tunnel header.
Example 13. The method according to any of examples 1 to 12, further comprising
   receiving a second service function chaining related request from said first network entity,
   transmitting said second service function chaining related request towards a second network entity,
   receiving a second service function chaining related response from said second network entity, and
   transmitting said second service function chaining related response towards said first network entity.
Example 14. The method according to example 13, wherein
   said second service function chaining related request is indicative of a demand for a catalogue of service function chains meeting a predetermined criterion, and
   said second service function chaining related response includes a list including information on at least one service function chain meeting said predetermined criterion.
Example 15. The method according to example 14, wherein
   said information on said at least one service function chain meeting said predetermined criterion includes an identifier of said at least one service function chain.
Example 16. The method according to example 14 or 15, wherein
   said information on said at least one service function chain meeting said predetermined criterion includes at least one of
   information on at least one service function of said at least one service function chain, and
   information on a service function path which is an instance of said service function chain.
Example 17. The method according to example 13, wherein
   said second service function chaining related request is indicative of a demand for creation of a new service function chain, and
   said second service function chaining related response includes an identifier of said new service function chain.
Example 18. The method according to example 17, wherein
   said second service function chaining related request includes information on at least one type of network traffic to which said new service function chain is applicable.
Example 19. The method according to example 17 or 18, wherein
   said second service function chaining related response includes information on a service function path which is an instance of said new service function chain.
Example 20. The method according to any of examples 13 to 18, wherein
   the first service function chaining related request is received before the second service function chaining request.
Example 21. The method according to any of examples 13 to 18, wherein
   the first service function chaining related request is received after the second service function chaining request.
Example 22. A method of a user data repository entity, the method comprising
   receiving, from a network exposure function entity, a service function chaining related user data repository entity modification operation, and
   modifying a storage content based on said service function chaining related user data repository entity modification operation, wherein
   said service function chaining related user data repository entity modification operation is a service function chaining related user data repository entity storing operation including at least a transaction identifier identifying a service function chain association, and
   in relation to said modifying, the method further comprises
      storing content of said service function chaining related user data repository entity storing operation as an entry labeled with said transaction identifier.
Example 23. The method according to example 22, wherein
   said service function chaining related user data repository entity storing operation includes at least information on at least one communication endpoint to network traffic of which a service function chain according to said service function chain association is to be applied.
Example 24. The method according to example 23, wherein
   said information on at least one communication endpoint includes at least one of
   at least one communication endpoint identifier corresponding to said at least one communication endpoint,
   a communication endpoint group identifier corresponding to said at least one communication endpoint, and
   a network domain identifier identifying a network domain associated with said at least one communication endpoint.
Example 25. The method according to any of examples 22 to 24, wherein
   said service function chaining related user data repository entity modification operation is a service function chaining related user data repository entity updating operation including at least said transaction identifier, and
   in relation to said modifying, the method further comprises
      updating an entry labeled with said transaction identifier based on content of said service function chaining related user data repository entity updating operation.
Example 26. The method according to any of examples 22 to 25, wherein
   said service function chaining related user data repository entity modification operation is a service function chaining related user data repository entity deleting operation including at least said transaction identifier, and
   in relation to said modifying, the method further comprises
      deleting an entry labeled with said transaction identifier.
Example 27. The method according to any of examples 22 to 26, further comprising
   transmitting, towards a policy control function entity, a notification on modification of said storage content.
Example 28. A method of a policy control function entity, the method comprising
   receiving service function chaining information related to a packet data unit session, and
   creating policy information for said packet data unit session based on said service function chaining information.
Example 29. The method according to example 28, wherein
   said service function chaining information includes at least one of
   information on a service function path to be applied to network traffic of said packet data unit session, said service function path being an instance of a service function chain,
   information on at least one type of said network traffic,
   information on a marking of said at least one type of said network traffic, and
   information on at least one communication endpoint of said network traffic.
Example 30. The method according to example 28 or 29, further comprising
   transmitting said policy information towards a network entity managing protocol data unit sessions in a mobile network.
Example 31. An apparatus of a network exposure function entity, the apparatus comprising
   receiving circuitry configured to receive a first service function chaining related request from a first network entity,
   modifying circuitry configured to modify a user data repository entity based on content of said first service function chaining related request, and
   transmitting circuitry configured to transmit a first service function chaining related response towards said first network entity, wherein
   said service function chaining related request is indicative of one of a demand for creating a service function chain association, a demand for updating said service function chain association, and a demand for deleting said service function chain association.
Example 32. The apparatus according to example 31, wherein
   said first service function chaining related request is indicative of said demand for creating said service function chain association, and
   said first service function chaining related request includes at least
      an identifier of a service function chain to be applied to network traffic,
      information on at least one type of said network traffic, and
      information on at least one communication endpoint of said network traffic.
Example 33. The apparatus according to example 32, wherein
   said information on at least one communication endpoint of said network traffic includes at least one of
   at least one communication endpoint identifier corresponding to said at least one communication endpoint,
   a communication endpoint group identifier corresponding to said at least one communication endpoint, and
   a network domain identifier identifying a network domain associated with said at least one communication endpoint.
Example 34. The apparatus according to example 32 or 33, wherein
   said first service function chaining related request includes at least information on a service function path which is an instance of said service function chain.
Example 35. The apparatus according to any of examples 32 to 34, wherein
   said first service function chaining related request includes at least a transaction identifier identifying said service function chain association. Example 36. The apparatus according to example 35, further comprising
   storing circuitry configured to store said content of said first service function chaining related request to said user data repository entity as an entry labeled with said transaction identifier.
Example 37. The apparatus according to example 31, wherein
   said first service function chaining related request is indicative of said demand for updating said service function chain association, and
   said first service function chaining related request includes at least a transaction identifier identifying said service function chain association.
Example 38. The apparatus according to example 37, further comprising
   updating circuitry configured to update an entry in said user data repository entity labeled with said transaction identifier based on said content of said first service function chaining related request.
Example 39. The apparatus according to example 31, wherein
   said first service function chaining related request is indicative of said demand for deleting said service function chain association, and
   said first service function chaining related request includes at least a transaction identifier identifying said service function chain association.
Example 40. The apparatus according to example 39, further comprising
   deleting circuitry configured to delete an entry in said user data repository entity labeled with said transaction identifier.
Example 41. The apparatus according to example 34, wherein
   said information on said service function path contains at least one of
   information on where the service function path is to apply,
   information on how to forward said network traffic to the service function chain instance corresponding to the service function path, and
   information on load balancing for said service function path defining a relationship of said service function path to other service function paths of said service function chain.
Example 42. The apparatus according to example 41, wherein
   said information on how to forward said network traffic to the service function chain includes at least one of
   a network service header,
   a virtual extensible local area network tag, and
   a generic routing encapsulation tunnel header.
Example 43. The apparatus according to any of examples 31 to 42, further comprising
   receiving circuitry configured to receive a second service function chaining related request from said first network entity, and
   transmitting circuitry configured to transmit said second service function chaining related request towards a second network entity, wherein
   said receiving circuitry is configured to receive a second service function chaining related response from said second network entity, and
   said transmitting circuitry is configured to transmit said second service function chaining related response towards said first network entity. Example 44. The apparatus according to example 43, wherein
   said second service function chaining related request is indicative of a demand for a catalogue of service function chains meeting a predetermined criterion, and
   said second service function chaining related response includes a list including information on at least one service function chain meeting said predetermined criterion.
Example 45. The apparatus according to example 44, wherein
   said information on said at least one service function chain meeting said predetermined criterion includes an identifier of said at least one service function chain.
Example 46. The apparatus according to example 44 or 45, wherein
   said information on said at least one service function chain meeting said predetermined criterion includes at least one of
   information on at least one service function of said at least one service function chain, and
   information on a service function path which is an instance of said service function chain.
Example 47. The apparatus according to example 43, wherein
   said second service function chaining related request is indicative of a demand for creation of a new service function chain, and
   said second service function chaining related response includes an identifier of said new service function chain.
Example 48. The apparatus according to example 47, wherein
   said second service function chaining related request includes information on at least one type of network traffic to which said new service function chain is applicable.
Example 49. The apparatus according to example 47 or 48, wherein
   said second service function chaining related response includes information on a service function path which is an instance of said new service function chain.
Example 50. The apparatus according to any of examples 43 to 48, wherein
   the first service function chaining related request is received before the second service function chaining request.
Example 51. The apparatus according to any of examples 43 to 48, wherein
   the first service function chaining related request is received after the second service function chaining request.
Example 52. An apparatus of a user data repository entity, the apparatus comprising
   receiving circuitry configured to receive, from a network exposure function entity, a service function chaining related user data repository entity modification operation, and
   modifying circuitry configured to modify a storage content based on said service function chaining related user data repository entity modification operation, wherein
   said service function chaining related user data repository entity modification operation is a service function chaining related user data repository entity storing operation including at least a transaction identifier identifying a service function chain association, and
   the apparatus further comprises
   storing circuitry configured to store content of said service function chaining related user data repository entity storing operation as an entry labeled with said transaction identifier.
Example 53. The apparatus according to example 52, wherein
   said service function chaining related user data repository entity storing operation includes at least information on at least one communication endpoint to network traffic of which a service function chain according to said service function chain association is to be applied.
Example 54. The apparatus according to example 53, wherein
   said information on at least one communication endpoint includes at least one of
   at least one communication endpoint identifier corresponding to said at least one communication endpoint,
   a communication endpoint group identifier corresponding to said at least one communication endpoint, and
   a network domain identifier identifying a network domain associated with said at least one communication endpoint.
Example 55. The apparatus according to any of examples 52 to 54, wherein
   said service function chaining related user data repository entity modification operation is a service function chaining related user data repository entity updating operation including at least said transaction identifier, and
   the apparatus further comprises
   updating circuitry configured to update an entry labeled with said transaction identifier based on content of said service function chaining related user data repository entity updating operation.
Example 56. The apparatus according to any of examples 52 to 55, wherein
   said service function chaining related user data repository entity modification operation is a service function chaining related user data repository entity deleting operation including at least said transaction identifier, and
   the apparatus further comprises
   deleting circuitry configured to delete an entry labeled with said transaction identifier.
Example 57. The apparatus according to any of examples 52 to 56, further comprising
   transmitting circuitry configured to transmit, towards a policy control function entity, a notification on modification of said storage content.
Example 58. An apparatus of a policy control function entity, the apparatus comprising
   receiving circuitry configured to receive service function chaining information related to a packet data unit session, and
   creating circuitry configured to create policy information for said packet data unit session based on said service function chaining information.
Example 59. The apparatus according to example 58, wherein
   said service function chaining information includes at least one of
   information on a service function path to be applied to network traffic of said packet data unit session, said service function path being an instance of a service function chain,
   information on at least one type of said network traffic,
   information on a marking of said at least one type of said network traffic, and
   information on at least one communication endpoint of said network traffic.
Example 60. The apparatus according to example 58 or 59, further comprising
   transmitting circuitry configured to transmit said policy information towards a network entity managing protocol data unit sessions in a mobile network.
Example 61. An apparatus of a network exposure function entity, the apparatus comprising
   at least one processor,
   at least one memory including computer program code, and
   at least one interface configured for communication with at least another apparatus,
   the at least one processor, with the at least one memory and the computer program code, being configured to cause the apparatus to perform:
   receiving a first service function chaining related request from a first network entity,
   modifying a user data repository entity based on content of said first service function chaining related request, and
   transmitting a first service function chaining related response towards said first network entity, wherein
   said service function chaining related request is indicative of one of a demand for creating a service function chain association, a demand for updating said service function chain association, and a demand for deleting said service function chain association.
Example 62. The apparatus according to example 61, wherein
   said first service function chaining related request is indicative of said demand for creating said service function chain association, and
   said first service function chaining related request includes at least
      an identifier of a service function chain to be applied to network traffic,
      information on at least one type of said network traffic, and
      information on at least one communication endpoint of said network traffic.
Example 63. The apparatus according to example 62, wherein
   said information on at least one communication endpoint of said network traffic includes at least one of
   at least one communication endpoint identifier corresponding to said at least one communication endpoint,
   a communication endpoint group identifier corresponding to said at least one communication endpoint, and
   a network domain identifier identifying a network domain associated with said at least one communication endpoint.
Example 64. The apparatus according to example 62 or 63, wherein
   said first service function chaining related request includes at least information on a service function path which is an instance of said service function chain.
Example 65. The apparatus according to any of examples 62 to 64, wherein
   said first service function chaining related request includes at least a transaction identifier identifying said service function chain association. Example 66. The apparatus according to example 65, wherein
   in relation to said modifying said user data repository entity, the at least one processor, with the at least one memory and the computer program code, being configured to cause the apparatus to perform:
      storing said content of said first service function chaining related request to said user data repository entity as an entry labeled with said transaction identifier.
Example 67. The apparatus according to example 61, wherein
   said first service function chaining related request is indicative of said demand for updating said service function chain association, and
   said first service function chaining related request includes at least a transaction identifier identifying said service function chain association. Example 68. The apparatus according to example 67, wherein
   in relation to said modifying said user data repository entity, the at least one processor, with the at least one memory and the computer program code, being configured to cause the apparatus to perform:
      updating an entry in said user data repository entity labeled with said transaction identifier based on said content of said first service function chaining related request.
Example 69. The apparatus according to example 61, wherein
   said first service function chaining related request is indicative of said demand for deleting said service function chain association, and
   said first service function chaining related request includes at least a transaction identifier identifying said service function chain association. Example 70. The apparatus according to example 69, wherein
   in relation to said modifying said user data repository entity, the at least one processor, with the at least one memory and the computer program code, being configured to cause the apparatus to perform:
      deleting an entry in said user data repository entity labeled with said transaction identifier.
Example 71. The apparatus according to example 64, wherein
   said information on said service function path contains at least one of
   information on where the service function path is to apply,
   information on how to forward said network traffic to the service function chain instance corresponding to the service function path, and
   information on load balancing for said service function path defining a relationship of said service function path to other service function paths of said service function chain.
Example 72. The apparatus according to example 71, wherein
   said information on how to forward said network traffic to the service function chain includes at least one of
   a network service header,
   a virtual extensible local area network tag, and
   a generic routing encapsulation tunnel header.
Example 73. The apparatus according to any of examples 61 to 72, wherein
   the at least one processor, with the at least one memory and the computer program code, being configured to cause the apparatus to perform:
   receiving a second service function chaining related request from said first network entity,
   transmitting said second service function chaining related request towards a second network entity,
   receiving a second service function chaining related response from said second network entity, and
   transmitting said second service function chaining related response towards said first network entity.
Example 74. The apparatus according to example 73, wherein
   said second service function chaining related request is indicative of a demand for a catalogue of service function chains meeting a predetermined criterion, and
   said second service function chaining related response includes a list including information on at least one service function chain meeting said predetermined criterion.
Example 75. The apparatus according to example 74, wherein
   said information on said at least one service function chain meeting said predetermined criterion includes an identifier of said at least one service function chain.
Example 76. The apparatus according to example 74 or 75, wherein
   said information on said at least one service function chain meeting said predetermined criterion includes at least one of
   information on at least one service function of said at least one service function chain, and
   information on a service function path which is an instance of said service function chain.
Example 77. The apparatus according to example 73, wherein
   said second service function chaining related request is indicative of a demand for creation of a new service function chain, and
   said second service function chaining related response includes an identifier of said new service function chain.
Example 78. The apparatus according to example 77, wherein
   said second service function chaining related request includes information on at least one type of network traffic to which said new service function chain is applicable.
Example 79. The apparatus according to example 77 or 78, wherein
   said second service function chaining related response includes information on a service function path which is an instance of said new service function chain.
Example 80. The apparatus according to any of examples 73 to 78, wherein
   the first service function chaining related request is received before the second service function chaining request.
Example 81. The apparatus according to any of examples 73 to 78, wherein
   the first service function chaining related request is received after the second service function chaining request.
Example 82. An apparatus of a user data repository entity, the apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving, from a network exposure function entity, a service function chaining related user data repository entity modification operation, and
      modifying a storage content based on said service function chaining related user data repository entity modification operation, wherein
   said service function chaining related user data repository entity modification operation is a service function chaining related user data repository entity storing operation including at least a transaction identifier identifying a service function chain association, and
   in relation to said modifying, the at least one processor, with the at least one memory and the computer program code, being configured to cause the apparatus to perform:
      storing content of said service function chaining related user data repository entity storing operation as an entry labeled with said transaction identifier.
Example 83. The apparatus according to example 82, wherein
   said service function chaining related user data repository entity storing operation includes at least information on at least one communication endpoint to network traffic of which a service function chain according to said service function chain association is to be applied.
Example 84. The apparatus according to example 83, wherein
   said information on at least one communication endpoint includes at least one of
   at least one communication endpoint identifier corresponding to said at least one communication endpoint,
   a communication endpoint group identifier corresponding to said at least one communication endpoint, and
   a network domain identifier identifying a network domain associated with said at least one communication endpoint.
Example 85. The apparatus according to any of examples 82 to 84, wherein
   said service function chaining related user data repository entity modification operation is a service function chaining related user data repository entity updating operation including at least said transaction identifier, and
   in relation to said modifying, the at least one processor, with the at least one memory and the computer program code, being configured to cause the apparatus to perform:
      updating an entry labeled with said transaction identifier based on content of said service function chaining related user data repository entity updating operation.
Example 86. The apparatus according to any of examples 82 to 85, wherein
   said service function chaining related user data repository entity modification operation is a service function chaining related user data repository entity deleting operation including at least said transaction identifier, and
   in relation to said modifying, the at least one processor, with the at least one memory and the computer program code, being configured to cause the apparatus to perform:
      deleting an entry labeled with said transaction identifier.
Example 87. The apparatus according to any of examples 82 to 86, wherein
   the at least one processor, with the at least one memory and the computer program code, being configured to cause the apparatus to perform:
   transmitting, towards a policy control function entity, a notification on modification of said storage content.
Example 88. An apparatus of a policy control function entity, the apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving service function chaining information related to a packet data unit session, and
      creating policy information for said packet data unit session based on said service function chaining information.
Example 89. The apparatus according to example 88, wherein
   said service function chaining information includes at least one of
   information on a service function path to be applied to network traffic of said packet data unit session, said service function path being an instance of a service function chain,
   information on at least one type of said network traffic,
   information on a marking of said at least one type of said network traffic, and
   information on at least one communication endpoint of said network traffic.
Example 90. The apparatus according to example 88 or 89, wherein
   the at least one processor, with the at least one memory and the computer program code, being configured to cause the apparatus to perform:
   transmitting said policy information towards a network entity managing protocol data unit sessions in a mobile network.
Example 91. A method comprising
   determining an association between information on a service function chain comprising at least one service function, information on network traffic to be handled by said service function chain, and information on how to forward said network traffic to the service function chain, wherein said information on network traffic to be handled by said service function chain includes information on at least one of a network traffic type and a definition of communication endpoints for such traffic, and
   transmitting information on said association towards a first network entity facilitating policy control in a network.
Example 92. The method according to example 91, wherein
   said service function chain is defined by at least one service function and processing flow order information with respect to said service functions, and wherein said service function chain is associated with a service function chain identifier of said service function chain.
Example 93. The method according to example 91 or 92, wherein
   said information on how to forward said network traffic to the service function chain or path includes information on headers to be added to such traffic before forwarding it.
Example 94. The method according to any of examples 91 to 93, wherein
   the definition of the communication endpoints for such traffic refers to at least one of a user equipment, a group of user equipments, a slice, a data network name, any user equipment, and any user equipment from a given home network.
Example 95. The method according to any of examples 91 to 93, wherein
   said association between said information on said service function chain, said information on network traffic to be handled by said service function path, and said information on how to forward said network traffic to the service function chain is defined for different service function paths which are instances of the service function chain, wherein each service function path can be associated with network location where this service function path applies.
Example 96. The method according to any of examples 91 to 95, wherein
   said association between said information on said service function chain, said information on network traffic to be handled by said service function path, and said information on how to forward said network traffic to the service function chain is defined for different service function paths which are instances of the service function chain, wherein each service function path can be associated with different information on how to forward said network traffic to the service function path.
Example 97. The method according to any of examples 91 to 96, wherein
   said service function path is associated with load balancing information for said service function path defining a relationship of said service function path to other service function paths of said service function chain.
Example 98. The method according to any of examples 91 to 97, wherein
   in relation to said transmitting information on said association towards a first network entity facilitating policy control in a network, the method further comprises
   storing the information in a data base that can provide the information to this first network entity facilitating policy control.
Example 99. The method according to example 91, wherein
   in relation to said determining, the method further comprises specifying said association.
Example 100. The method according to example 99, further comprising
   creating said service function path for said service function chain. Example 101. The method according to example 99 or 010, wherein
   said first network entity is an application function entity.
Example 102. The method according to example 101, further comprising
   transmitting a service function chain identifier of said service function chain towards said application function entity.
Example 103. The method according to any of examples 95 to 100, further comprising
   transmitting a service function chain identifier of said service function chain towards an application function entity, and/or
   transmitting said service function chain identifier of said service function chain towards said first network entity.
Example 104. The method according to example 101 or 102, further comprising
   performing a change in relation to said service function chain, and
   notifying said application function entity on said change in relation to said service function chain, wherein
   said change in relation to said service function chain includes addition and/or removal of a certain service function path for said service function chain.
Example 105. The method according to any of examples 95 to 104, further comprising
   receiving, from said application function entity, a request for creation, modification, deletion of said service function chain.
Example 106. The method according to example 105, wherein
   said request includes information on network traffic to be handled by said service function path and information on how to forward said network traffic.
Example 107. The method according to any of examples 95 to 106, further comprising
   receiving a request for a catalogue of service function chains meeting a predetermined criterion,
   determining all service function chains matching said predetermined criterion, and
   returning said catalogue including all matching service function chains. Example 108. The method according to example 91, wherein
   in relation to said determining, the method further comprises
      receiving said information on said association.
Example 109. The method according to example 108, further comprising
   transmitting a request for creation of said service function chain. Example 110. The method according to example 109, wherein
   said request includes information on network traffic to be handled by said created service function path.
Example 111. The method according to any of examples 108 to 110, further comprising
   transmitting a request for application of said service function chain to said network traffic towards said communication endpoints towards said first network entity.
Example 112. The method according to any of examples 104 to 111, further comprising
   transmitting a request for a catalogue of service function chains matching a predetermined criterion, and
   receiving said catalogue including said service function chain.
Example 113. A method comprising
   receiving information on an association between information on a service function path which is an instance of a service function chain comprising at least one service function and information on network traffic to be handled by said service function path and information on how to forward said network traffic, wherein said information on network traffic to be handled by said service function path includes information on a combination of a network traffic type and communication endpoints, and
   creating policy information based on said information on said association.
Example 114. The method according to example 113, further comprising
   transmitting said policy information towards a network entity managing protocol data unit sessions in a network.
Example 115. The method according to example 113 or 114, further comprising
   receiving a request for application of said service function chain to said network traffic towards said communication endpoints.
Example 116. An apparatus comprising
   determining circuitry configured to determine an association between information on a service function chain comprising at least one service function, information on network traffic to be handled by said service function chain, and information on how to forward said network traffic to the service function chain, wherein said information on network traffic to be handled by said service function chain includes information on at least one of a network traffic type and a definition of communication endpoints for such traffic, and
   transmitting circuitry configured to transmit information on said association towards a first network entity facilitating policy control in a network.
Example 117. The apparatus according to example 116, wherein
   said service function chain is defined by at least one service function and processing flow order information with respect to said service functions, and wherein said service function chain is associated with a service function chain identifier of said service function chain.
Example 118. The apparatus according to example 116 or 117, wherein
   said information on how to forward said network traffic to the service function chain or path includes information on headers to be added to such traffic before forwarding it.
Example 119. The apparatus according to any of examples 116 to 118, wherein
   the definition of the communication endpoints for such traffic refers to at least one of a user equipment, a group of user equipments, a slice, a data network name, any user equipment, and any user equipment from a given home network.
Example 120. The apparatus according to any of examples 116 to 118, wherein
   said association between said information on said service function chain, said information on network traffic to be handled by said service function path, and said information on how to forward said network traffic to the service function chain is defined for different service function paths which are instances of the service function chain, wherein each service function path can be associated with network location where this service function path applies.
Example 121. The apparatus according to any of examples 116 to 120, wherein
   said association between said information on said service function chain, said information on network traffic to be handled by said service function path, and said information on how to forward said network traffic to the service function chain is defined for different service function paths which are instances of the service function chain, wherein each service function path can be associated with different information on how to forward said network traffic to the service function path.
Example 122. The apparatus according to any of examples 116 to 121, wherein
   said service function path is associated with load balancing information for said service function path defining a relationship of said service function path to other service function paths of said service function chain.
Example 123. The apparatus according to any of examples 116 to 122, further comprising
   storing circuitry configured to store the information in a data base that can provide the information to this first network entity facilitating policy control.
Example 124. The apparatus according to example 116, further comprising
   specifying circuitry configured to specify said association.
Example 125. The apparatus according to example 124, further comprising
   creating circuitry configured to create said service function path for said service function chain.
Example 126. The apparatus according to example 124 or 125, wherein
   said first network entity is an application function entity.
Example 127. The apparatus according to example 126, further comprising
   transmitting circuitry configured to transmit a service function chain identifier of said service function chain towards said application function entity.
Example 128. The apparatus according to any of examples 120 to 125, further comprising
   transmitting circuitry configured to
   transmit a service function chain identifier of said service function chain towards an application function entity, and/or to
   transmit said service function chain identifier of said service function chain towards said first network entity.
Example 129. The apparatus according to example 126 or 127, further comprising
   performing circuitry configured to perform a change in relation to said service function chain, and
   notifying circuitry configured to notify said application function entity on said change in relation to said service function chain, wherein
   said change in relation to said service function chain includes addition and/or removal of a certain service function path for said service function chain.
Example 130. The apparatus according to any of examples 120 to 129, further comprising
   receiving circuitry configured to receive, from said application function entity, a request for creation, modification, deletion of said service function chain.
Example 131. The apparatus according to example 130, wherein
   said request includes information on network traffic to be handled by said service function path and information on how to forward said network traffic.
Example 132. The apparatus according to any of examples 120 to 131, further comprising
   receiving circuitry configured to receive a request for a catalogue of service function chains meeting a predetermined criterion,
   determining circuitry configured to determine all service function chains matching said predetermined criterion, and
   returning circuitry configured to return said catalogue including all matching service function chains.
Example 133. The apparatus according to example 116, further comprising
   receiving circuitry configured to receive said information on said association.
Example 134. The apparatus according to example 133, further comprising
   transmitting circuitry configured to transmit a request for creation of said service function chain.
Example 135. The apparatus according to example 134, wherein
   said request includes information on network traffic to be handled by said created service function path.
Example 136. The apparatus according to any of examples 133 to 135, further comprising
   transmitting circuitry configured to transmit a request for application of said service function chain to said network traffic towards said communication endpoints towards said first network entity.
Example 137. The apparatus according to any of examples 129 to 136, further comprising
   transmitting circuitry configured to transmit a request for a catalogue of service function chains matching a predetermined criterion, and
   receiving circuitry configured to receive said catalogue including said service function chain.
Example 138. An apparatus comprising
   receiving circuitry configured to receive information on an association between information on a service function path which is an instance of a service function chain comprising at least one service function and information on network traffic to be handled by said service function path and information on how to forward said network traffic, wherein said information on network traffic to be handled by said service function path includes information on a combination of a network traffic type and communication endpoints, and
   creating circuitry configured to create policy information based on said information on said association.
Example 139. The apparatus according to example 138, further comprising
   transmitting circuitry configured to transmit said policy information towards a network entity managing protocol data unit sessions in a network. Example 140. The apparatus according to example 138 or 139, further comprising
   receiving circuitry configured to receive a request for application of said service function chain to said network traffic towards said communication endpoints.
Example 141. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      determining an association between information on a service function chain comprising at least one service function, information on network traffic to be handled by said service function chain, and information on how to forward said network traffic to the service function chain, wherein said information on network traffic to be handled by said service function chain includes information on at least one of a network traffic type and a definition of communication endpoints for such traffic, and
      transmitting information on said association towards a first network entity facilitating policy control in a network.
Example 142. The apparatus according to example 141, wherein
   said service function chain is defined by at least one service function and processing flow order information with respect to said service functions, and wherein said service function chain is associated with a service function chain identifier of said service function chain.
Example 143. The apparatus according to example 141 or 142, wherein
   said information on how to forward said network traffic to the service function chain or path includes information on headers to be added to such traffic before forwarding it.
Example 144. The apparatus according to any of examples 141 to 143, wherein
   the definition of the communication endpoints for such traffic refers to at least one of a user equipment, a group of user equipments, a slice, a data network name, any user equipment, and any user equipment from a given home network.
Example 145. The apparatus according to any of examples 141 to 143, wherein
   said association between said information on said service function chain, said information on network traffic to be handled by said service function path, and said information on how to forward said network traffic to the service function chain is defined for different service function paths which are instances of the service function chain, wherein each service function path can be associated with network location where this service function path applies.
Example 146. The apparatus according to any of examples 141 to 145, wherein
   said association between said information on said service function chain, said information on network traffic to be handled by said service function path, and said information on how to forward said network traffic to the service function chain is defined for different service function paths which are instances of the service function chain, wherein each service function path can be associated with different information on how to forward said network traffic to the service function path.
Example 147. The apparatus according to any of examples 141 to 146, wherein
   said service function path is associated with load balancing information for said service function path defining a relationship of said service function path to other service function paths of said service function chain.
Example 148. The apparatus according to any of examples 141 to 147, wherein
   in relation to said transmitting information on said association towards a first network entity facilitating policy control in a network, the at least one processor, with the at least one memory and the computer program code, being configured to cause the apparatus to perform:

   storing the information in a data base that can provide the information to this first network entity facilitating policy control.
Example 149. The apparatus according to example 141, wherein
   in relation to said determining, the at least one processor, with the at least one memory and the computer program code, being configured to cause the apparatus to perform:
   specifying said association.
Example 150. The apparatus according to example 149, wherein
   the at least one processor, with the at least one memory and the computer program code, being configured to cause the apparatus to perform:
   creating said service function path for said service function chain.
Example 151. The apparatus according to example 149 or 150, wherein
   said first network entity is an application function entity.
Example 152. The apparatus according to example 151, wherein
   the at least one processor, with the at least one memory and the computer program code, being configured to cause the apparatus to perform:
   transmitting a service function chain identifier of said service function chain towards said application function entity.
Example 153. The apparatus according to any of examples 145 to 150, wherein
   the at least one processor, with the at least one memory and the computer program code, being configured to cause the apparatus to perform:
   transmitting a service function chain identifier of said service function chain towards an application function entity, and/or
   transmitting said service function chain identifier of said service function chain towards said first network entity.
Example 154. The apparatus according to example 151 or 152, wherein
   the at least one processor, with the at least one memory and the computer program code, being configured to cause the apparatus to perform:
   performing a change in relation to said service function chain, and
   notifying said application function entity on said change in relation to said service function chain, wherein
   said change in relation to said service function chain includes addition and/or removal of a certain service function path for said service function chain.
Example 155. The apparatus according to any of examples 145 to 154, wherein
   the at least one processor, with the at least one memory and the computer program code, being configured to cause the apparatus to perform:
   receiving, from said application function entity, a request for creation, modification, deletion of said service function chain.
Example 156. The apparatus according to example 155, wherein
   said request includes information on network traffic to be handled by said service function path and information on how to forward said network traffic.
Example 157. The apparatus according to any of examples 145 to 156, wherein
   the at least one processor, with the at least one memory and the computer program code, being configured to cause the apparatus to perform:
   receiving a request for a catalogue of service function chains meeting a predetermined criterion,
   determining all service function chains matching said predetermined criterion, and
   returning said catalogue including all matching service function chains.
Example 158. The apparatus according to example 141, wherein
   in relation to said determining, the at least one processor, with the at least one memory and the computer program code, being configured to cause the apparatus to perform:
   receiving said information on said association.
Example 159. The apparatus according to example 158, wherein
   the at least one processor, with the at least one memory and the computer program code, being configured to cause the apparatus to perform:
   transmitting a request for creation of said service function chain.
Example 160. The apparatus according to example 159, wherein
   said request includes information on network traffic to be handled by said created service function path.
Example 161. The apparatus according to any of examples 158 to 160, wherein
   the at least one processor, with the at least one memory and the computer program code, being configured to cause the apparatus to perform:
   transmitting a request for application of said service function chain to said network traffic towards said communication endpoints towards said first network entity.
Example 162. The apparatus according to any of examples 154 to 161, wherein
   the at least one processor, with the at least one memory and the computer program code, being configured to cause the apparatus to perform:
   transmitting a request for a catalogue of service function chains matching a predetermined criterion, and
   receiving said catalogue including said service function chain.
Example 163. An apparatus comprising
   at least one processor,
   at least one memory including computer program code, and
   at least one interface configured for communication with at least another apparatus,
   the at least one processor, with the at least one memory and the computer program code, being configured to cause the apparatus to perform:
      receiving information on an association between information on a service function path which is an instance of a service function chain comprising at least one service function and information on network traffic to be handled by said service function path and information on how to forward said network traffic, wherein said information on network traffic to be handled by said service function path includes information on a combination of a network traffic type and communication endpoints, and
      creating policy information based on said information on said association.
Example 164. The apparatus according to example 163, wherein
   the at least one processor, with the at least one memory and the computer program code, being configured to cause the apparatus to perform:
   transmitting said policy information towards a network entity managing protocol data unit sessions in a network.
Example 165. The apparatus according to example 163 or 164, wherein
   the at least one processor, with the at least one memory and the computer program code, being configured to cause the apparatus to perform:
   receiving a request for application of said service function chain to said network traffic towards said communication endpoints.
Example 166. A computer program product comprising computer-executable computer program code which, when the program is run on a computer, is configured to cause the computer to carry out the method according to any one of examples 1 to 21, 22 to 27, 28 to 30, 91 to 112, or 113 to 115.
Example 167. The computer program product according to example 166, wherein the computer program product comprises a computer-readable medium on which the computer-executable computer program code is stored, and/or wherein the program is directly loadable into an internal memory of the computer or a processor thereof.

### List of acronyms and abbreviations

- 3GPP: 3rd Generation Partnership Project
- AF: application function
- API: application programming interface
- DL: downlink
- DN: data network
- DNAI: data network access identifier
- DNN: data network name
- DPI: deep packet inspection
- EPC: Evolved Packet Core
- EPS: Evolved Packet System
- ETH: Ethernet
- FW: Firewall
- GRE: generic routing encapsulation
- LTE: Long Term Evolution
- NAT: network address translation
- NEF: network exposure function
- NSH: network service header
- OAM: Operations, Administration and Maintenance
- PCC: policy and charging control
- PCF: policy control function
- PCRF: policy and charging rules function
- PDU: protocol data unit
- PGW-c: packet data network gateway in control plane
- SCO: service chain orchestrator
- SF: service function
- SFC: service function chain
- SFC: service function chaining
- SFP: service function path
- S-NSSAI: single - network slice selection assistance information
- SMF: session management function
- SUPI: subscription permanent identifier
- TCP/IP: transmission control protocol / internet protocol
- TDF: traffic detection function
- TSP: traffic steering policy
- TSSF: traffic steering support function
- UDR: unified data repository
- UE: user equipment
- UL: uplink
- UPF: user plane function

## Claims

1. A method of a network exposure function entity, the method comprising
receiving a first service function chaining related request from a first network entity,
modifying a user data repository entity based on content of said first service function chaining related request, and
transmitting a first service function chaining related response towards said first network entity, wherein
said service function chaining related request is indicative of one of a demand for creating a service function chain association, a demand for updating said service function chain association, and a demand for deleting said service function chain association.

2. The method according to claim 1, wherein
said first service function chaining related request is indicative of said demand for creating said service function chain association, and
said first service function chaining related request includes at least
an identifier of a service function chain to be applied to network traffic,
information on at least one type of said network traffic, and
information on at least one communication endpoint of said network traffic.

3. The method according to claim 2, wherein
said first service function chaining related request includes at least information on a service function path which is an instance of said service function chain.

4. The method according to claim 2 or 3, wherein
in relation to said modifying said user data repository entity, the method further comprises
storing said content of said first service function chaining related request to said user data repository entity as an entry labeled with said transaction identifier.

5. The method according to claim 1, wherein
said first service function chaining related request is indicative of said demand for updating said service function chain association, and
said first service function chaining related request includes at least a transaction identifier identifying said service function chain association.

6. The method according to claim 5, wherein
in relation to said modifying said user data repository entity, the method further comprises
updating an entry in said user data repository entity labeled with said transaction identifier based on said content of said first service function chaining related request.

7. The method according to claim 3, wherein
said information on said service function path contains at least one of
information on where the service function path is to apply,
information on how to forward said network traffic to the service function chain instance corresponding to the service function path, and
information on load balancing for said service function path defining a relationship of said service function path to other service function paths of said service function chain.

8. The method according to any of claims 1 to 7, further comprising
receiving a second service function chaining related request from said first network entity,
transmitting said second service function chaining related request towards a second network entity,
receiving a second service function chaining related response from said second network entity, and
transmitting said second service function chaining related response towards said first network entity.

9. The method according to claim 8, wherein
said second service function chaining related request is indicative of a demand for a catalogue of service function chains meeting a predetermined criterion, and
said second service function chaining related response includes a list including information on at least one service function chain meeting said predetermined criterion.

10. The method according to claim 8, wherein
said second service function chaining related request is indicative of a demand for creation of a new service function chain, and
said second service function chaining related response includes an identifier of said new service function chain.

11. The method according to claim 10, wherein
said second service function chaining related request includes information on at least one type of network traffic to which said new service function chain is applicable.

12. The method according to claim 10 or 11, wherein
said second service function chaining related response includes information on a service function path which is an instance of said new service function chain.

13. A method of a user data repository entity, the method comprising
receiving, from a network exposure function entity, a service function chaining related user data repository entity modification operation, and
modifying a storage content based on said service function chaining related user data repository entity modification operation, wherein
said service function chaining related user data repository entity modification operation is a service function chaining related user data repository entity storing operation including at least a transaction identifier identifying a service function chain association, and
in relation to said modifying, the method further comprises
storing content of said service function chaining related user data repository entity storing operation as an entry labeled with said transaction identifier.

14. The method according to claim 13, wherein
said service function chaining related user data repository entity storing operation includes at least information on at least one communication endpoint to network traffic of which a service function chain according to said service function chain association is to be applied.

15. The method according to claim 13 or 14, wherein
said service function chaining related user data repository entity modification operation is a service function chaining related user data repository entity updating operation including at least said transaction identifier, and
in relation to said modifying, the method further comprises
updating an entry labeled with said transaction identifier based on content of said service function chaining related user data repository entity updating operation.

16. The method according to any of claims 13 to 15, wherein
said service function chaining related user data repository entity modification operation is a service function chaining related user data repository entity deleting operation including at least said transaction identifier, and
in relation to said modifying, the method further comprises
deleting an entry labeled with said transaction identifier.

17. The method according to any of claims 13 to 16, further comprising
transmitting, towards a policy control function entity, a notification on modification of said storage content.

18. A method of a policy control function entity, the method comprising
receiving service function chaining information related to a packet data unit session, and
creating policy information for said packet data unit session based on said service function chaining information.

19. The method according to claim 18, wherein
said service function chaining information includes at least one of
information on a service function path to be applied to network traffic of said packet data unit session, said service function path being an instance of a service function chain,
information on at least one type of said network traffic,
information on a marking of said at least one type of said network traffic, and
information on at least one communication endpoint of said network traffic.

20. The method according to claim 18 or 19, further comprising
transmitting said policy information towards a network entity managing protocol data unit sessions in a mobile network.

21. An apparatus of a network exposure function entity, the apparatus comprising
receiving circuitry configured to receive a first service function chaining related request from a first network entity,
modifying circuitry configured to modify a user data repository entity based on content of said first service function chaining related request, and
transmitting circuitry configured to transmit a first service function chaining related response towards said first network entity, wherein
said service function chaining related request is indicative of one of a demand for creating a service function chain association, a demand for updating said service function chain association, and a demand for deleting said service function chain association.

22. An apparatus of a user data repository entity, the apparatus comprising
receiving circuitry configured to receive, from a network exposure function entity, a service function chaining related user data repository entity modification operation, and
modifying circuitry configured to modify a storage content based on said service function chaining related user data repository entity modification operation, wherein
said service function chaining related user data repository entity modification operation is a service function chaining related user data repository entity storing operation including at least a transaction identifier identifying a service function chain association, and
the apparatus further comprises
storing circuitry configured to store content of said service function chaining related user data repository entity storing operation as an entry labeled with said transaction identifier.

23. An apparatus of a policy control function entity, the apparatus comprising
receiving circuitry configured to receive service function chaining information related to a packet data unit session, and
creating circuitry configured to create policy information for said packet data unit session based on said service function chaining information.

24. A computer program product comprising computer-executable computer program code which, when the program is run on a computer, is configured to cause the computer to carry out the method according to any one of claims 1 to 12, 13 to 17, or 18 to 20, wherein optionally
the computer program product comprises a computer-readable medium on which the computer-executable computer program code is stored, and/or wherein the program is directly loadable into an internal memory of the computer or a processor thereof.
